# EUROPEAN PATENT SPECIFICATION

(11) **EP 1 656 501 B1**
(45) Date of publication and mention of the grant of the patent: **15.11.2006**
(21) Application number: 04747888.8
(22) Date of filing: 16.07.2004
(51) Int. Cl.: F04B 35/00, F04B 27/08, F16D 9/00, F16D 7/00, F04C 29/00

(54) **POWER TRANSMISSION DEVICE, METHOD FOR MANUFACTURING THE SAME AND COMPRESSOR**
KRAFTÜBERTRAGUNGSMECHANISMUS, VERFAHREN ZU DESSEN HERSTELLUNG UND KOMPRESSOR
DISPOSITIF DE TRANSMISSION DE PUISSANCE, METHODE DE FABRICATION DE CE DISPOSITIF ET COMPRESSEUR ASSOCIE

(30) Priority: 18.07.2003 JP 2003276727; 22.03.2004 JP 2004083478
(43) Date of publication of application: 17.05.2006
(73) Proprietor: Calsonic Kansei Corporation, Tokyo 164-8602 (JP)
(72) Inventor: UMEMURA, Yukio c/o Calsonic Kansei Corporation, Nakano-ku, Toyo 164-8602 (JP)
(74) Representative: Grünecker, Kinkeldey, Stockmair & Schwanhäusser Anwaltssozietät
(86) International application number: PCT/JP2004/010524
(87) International publication number: WO 2005/008068

(56) References cited:
- EP-A- 1 207 316
- PATENT ABSTRACTS OF JAPAN vol. 1999, no. 01, 29 January 1999 (1999-01-29) & JP 10 267047 A (SANDEN CORP), 6 October 1998 (1998-10-06)
- PATENT ABSTRACTS OF JAPAN vol. 2003, no. 09, 3 September 2003 (2003-09-03) & JP 2003 148510 A (OGURA CLUTCH CO LTD), 21 May 2003 (2003-05-21)
- PATENT ABSTRACTS OF JAPAN vol. 2000, no. 06, 22 September 2000 (2000-09-22) & JP 2000 087850 A (ZEXEL CORP), 28 March 2000 (2000-03-28) cited in the application
- PATENT ABSTRACTS OF JAPAN vol. 1996, no. 09, 30 September 1996 (1996-09-30) & JP 8 121333 A (TOYOTA AUTOM LOOM WORKS LTD), 14 May 1996 (1996-05-14)

## Description

### Technical Field

The present invention relates to a power transmission device, a method for manufacturing the same and a compressor including the same therein.

### Background Art

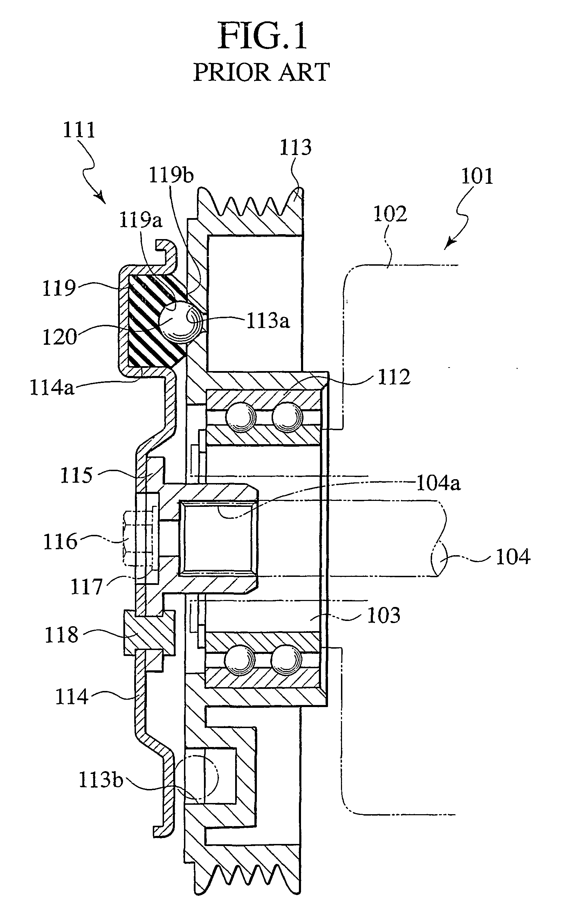

A conventional power transmission device is disclosed in Japanese Patent Application Publication Laid-open No.2000-87850, and is applied to a clutchless compressor. As shown in FIG.1 a compressor 101 includes a housing 102, a rotary shaft 104 and a power transmission device 111. The housing 102 has an end portion at which a boss portion 103 is formed. The rotary shaft 104 has an end portion 104a which passes loosely through the boss portion 103. The boss portion 103 is coaxial with the rotary shaft 104.

The power transmission device 111 includes a bearing 112, a pulley 113, a cover member 114, a hub 115, a bolt 116, a washer 117, rivets 118, buffer rubbers 119 and rolling balls 120. The pulley 113 is rotatably held by the boss portion 103 via the bearing 112. The bearing 112 and the pulley 113 are coaxial with the rotary shaft 104. The pulley 113 has an external circumference on which a belt (not shown in the figure) is wound. The belt is coupled with a crankshaft (not shown) of an engine.

The cover member 114 is formed into the shape of a disk and is fixed via the hub 115 to the end portion 104a of the rotary shaft 104 with the bolt 116 and the washer 117. Further, the cover member 114 is fastened to the hub 115 with the rivets 118. The cover member 114 and the hub 115 are coaxial with the rotary shaft 104.

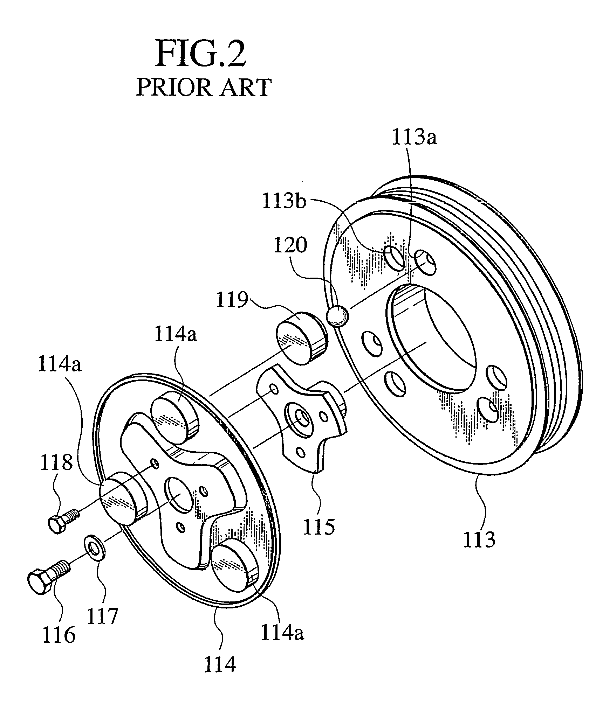

As shown in FIG.2, the cover member 114 has a periphery on which plural recessed portions 114a are formed. The recessed portions 114a are disposed along the same circumference whose center coincides with the axis of the cover member 114. Each of the recessed portions 114a is located a regular angle apart from the adjacent ones 114a. The buffer rubbers 119 are formed nearly into the shape of a column and are fastened to the interior of the recessed portions 114a with an adhesive, respectively The buffer rubber 119 has an end face 119b, protruding from the recessed portion 114a, where the end face 119b has a concave portion 119a for receiving one part of the rolling ball 120 slidably (refer to FIG.1). Besides, a power-transmission cutoff member is composed of the buffer rubber 119 and rolling ball 120.

The pulley 113 has hole portions 113a, at the locations opposite to the concave portions 119a, for receiving the other part of the rolling balls 120 slidably. The hole portions 113a are disposed along the same circumference whose center coincides with the axis of the pulley 113. Each of the hole portions 113a is located a regular angle apart from the adjacent ones 113a. The depth of the hole portions 113a is designed such a depth that the rolling ball 120 can be surely released from the hole portion 113a when a torque-load larger than a given value is applied to the rolling ball 120.

Openings 113b are formed along the above circumference on which the hole portions 113a are disposed, and receive the rolling balls 120 released from the hole portions 113a. The depth of the openings 113b is larger than a diameter of the rolling balls 120.

When the engine is driven, power is transmitted via the belt to the power transmission device 111 and then rotates the pulley 113. Further, the power is transmitted via the rolling balls 120, the buffer rubbers 119, the cover member 114 and the hub 115 to the rotary shaft 104.

Once burn-in occurs in the interior of the compressor 101, the rotary shaft 104 stops rotating. Following the occurrence, the hub 115 and the cover member 114 also stop rotating, and therefore the numbers of revolutions of the pulley 113 and the cover member 114 come to differ from each other, resulting in that a torque load is applied to the buffer rubbers 119. When the torque load exceeds the given value, according to the application of the torque load to the rolling balls 120 via the buffer rubbers 119, the rolling balls 120 get out of the concave portions 119a against the holding force of the buffer rubbers 119 and are simultaneously released from the hole potions 113a. And then, the rolling balls 120 will enter into the interiors of the openings 113b. Since the power transmission from the pulley 113 to the rotary shaft 104 is cut off through the above mechanism, the pulley 113 will run idle.

However, when the power transmission from the pulley 113 to the rotary shaft 104 is cut off, it is necessary to release each rolling ball 120 from the concave portion 119a of the buffer rubber 119 and the hole portion 113a of the pulley 113 which cover the whole external circumference of the rolling ball 120. Therefore, the torque load required to cut off the power transmission varies to a large extent due to wear of the concave portion 119a and/or the hole portions 113a. Further, since the torque load is applied to the rolling ball 120 via the buffer rubber 119, the torque load required to cut off the power transmission varies to a large extent due to age-degradation of the buffer rubbers 119. As a result, the power transmission device 111 possesses lower reliability because the torque load required to cut off the power transmission varies each time the device is operated. Moreover, the assembling operation is laborious and the productivity is low because the rolling ball 120 should be disposed between the pulley 113 and the buffer rubber 119.

Another power transmission device is known from EP 1207316 A1, which comprises a plurality of coupling members mounted on a driving body engaging corresponding pins of a driven body. Claim 1 is characterised over this disclosure.

### Disclosure of Invention

The object of the present invention is to provide a power transmission device and a method for manufacturing the same to realize that power transmission is cut off at a constant torque load and an assembling operation is simply performed.

The object of the present invention is also to provide a compressor to realize that power transmission is cut off at a constant torque load and an assembling operation is simply performed.

The present invention provides a power transmission device comprising : a first transmission member rotatably attached at a boss portion of a housing of a compressor ; a second transmission member fixed to an end portion of a rotary shaft passing loosely through the boss portion; a first pin mounted on one of the first transmission member and the second transmission member ; a second pin mounted on the other of the first transmission member and the second transmission member ; and a coupling member coupling the first pin with the second pin to transmit power from the first transmission member to the second transmission member and cutting off the power transmission when a torque load applied to the first pin exceeds a given value, wherein the coupling member comprising : a pair of sidepiece portions disposed parallel to each other ; a pair of bent portions having free ends, basic ends joined integrally to first ends of the sidepiece portions respectively and sandwich portions supporting the first pin by sandwiching, wherein each of the sandwich portions comprising ; plural projections disposed at regular intervals one another in a circumferential direction of the first pin and contacted with the outside circumferential surface of the first pin ; and plural surfaces each disposed between the adjacent projections and opposed to the outside circumferential surface of the first pin at a regular distance ; and a curved portion having both ends joined integrally to second ends of the sidepiece portions respectively and a hole through and into which the second pin is passed and fitted, wherein the first pin is sandwiched between the sandwich portions by inserting the first pin into a spacing between the sidepiece portions and then pressing the first pin toward the bent portion side to deform the bent portions in a direction away from each other and the first pin is released from the coupling member when the torque load applied to the first pin exceeds a given value.

According to the present invention, the contact area between the first pin and the coupling member is suppressed to a minimum because the projections are only contacted with the outside circumferential surface of the first pin under the condition where the sandwich portions support the first pin by sandwiching. Therefore, this prevents the force, which is required for releasing the first pin out of the coupling member, from suffering from the age-degradation of the coupling member. As a result, power transmission is always cut off at a constant torque load.

The present invention provides a method for manufacturing a power transmission device, comprising the steps of : fitting a first pin into a hole of a coupling member wherein the first pin is mounted on one of a first transmission member and a second transmission member ; inserting a second pin into a spacing of the coupling member wherein the second pin is mounted on the other of the first transmission member and the second transmission member ; fastening the transmission member on which the first pin is mounted ; and sandwiching the second pin between sandwich portions of the coupling member by rotating the transmission member on which the second pin is mounted to move the second pin toward an open end side of the spacing.

According to the present invention, the manufacturing operation is completed by fitting the first pin into the hole and then sandwiching the second pin between the sandwich portions. Therefore, the assembling operation is simply performed.

The present invention provides a compressor comprising : a housing ; a boss portion formed at end portion of the housing ; a rotary shaft passing loosely through the boss portion ; and a power transmission device transmitting deriving force of an engine to the rotary shaft, wherein the power transmission device comprising : a first transmission member rotatably attached at the boss portion ; a second transmission member fixed to an end portion of the rotary shaft ; a first pin mounted on one of the first transmission member and the second transmission member ; a second pin mounted on the other of the first transmission member and the second transmission member ; and a coupling member coupling the first pin with the second pin to transmit power from the first transmission member to the second transmission member and cutting off the power transmission when a torque load applied to the first pin exceeds a given value, wherein the coupling member comprising : a pair of sidepiece portions disposed parallel to each other ; a pair of bent portions respectively having free ends, basic ends joined integrally to first ends of the sidepiece portions respectively and sandwich portions supporting the first pin by sandwiching wherein each of the sandwich portions comprising : plural projections disposed at regular intervals one another in a circumferential direction of the first pin and contacted with the outside circumferential surface of the first pin; and plural surfaces each disposed between the adjacent projections and opposed to the outside circumferential surface of the first pin at a regular distance ; and a curved portion having both ends joined integrally to second ends of the sidepiece portions respectively and having a hole through and into which the second pin is passed and fitted, wherein the first pin is sandwiched between the sandwich portions by inserting the first pin into a spacing between the sidepiece portions and then pressing the first pin toward the bent portion side to deform the bent portions in a direction away from each other and the first pin is released from the coupling member when the torque load applied to the first pin exceeds a given value.

According to the present invention, the contact area between the first pin and the coupling member is suppressed to a minimum because the projections are only contacted with the outside circumferential surface of the first pin under the condition where the sandwich portions support the first pin by sandwiching. Therefore, this prevents the force, which is required for releasing the first pin out of the coupling member, from suffering from the age-degradation of the coupling member. As a result, power transmission is always cut off at a constant torque load.

Further, according to the present invention, the manufacturing operation is completed by fitting the first pin into the hole and then sandwiching the second pin between the sandwich portions. Therefore, the assembling operation is simply performed.

### Brief Description of Drawings

FIG.1 is a cross-sectional view of the main portion of a conventional power transmission device.
FIG.2 is an exploded perspective view of the main portion of the conventional power transmission device.
FIG.3 is a schematic view of an air conditioning system for vehicles according to the present invention.
FIG.4 is a side view of a compressor according to the present invention.
FIG.5 is a side view of the main portion of a power transmission device relating to a first embodiment of the present invention.
FIG.6 is a cross-sectional view sectioned along the VI-VI line in FIG.5.
FIG.7 is a cross-sectional view sectioned along the VII-VII line in FIG.5.
FIG.8 is a plan view of a coupling member relating to the first embodiment of the present invention.
FIG.9 is an enlarged plan view of the main portion of FIG.8.
FIG.10 is an explanatory view showing an assembling method of the power transmission device relating to the first embodiment of the present invention.
FIGS.11A to 11E are explanatory views showing a power cutoff mechanism in the power transmission device relating to the first embodiment of the present invention.
FIG.12 is an enlarged plan view of the main portion of a coupling member relating to a first modification of the first embodiment of the present invention.
FIG.13 is an enlarged plan view of the main portion of a coupling member relating to a second modification of the first embodiment of the present invention.
FIG.14 is a plan view of a coupling member relating to a third modification of the first embodiment of the present invention.
FIG.15 is a plan view of a coupling member relating to a second embodiment of the present invention.
FIG. 16 is an enlarged plan view of the main portion of FIG. 15.
FIG.17A is an explanatory view showing a pull-out load applied to the coupling member relating to the second embodiment of the present invention when a fist pin is located on second projections of holding portions.
FIG.17B is an explanatory view showing a pull-out load applied to the coupling member relating to the second embodiment of the present invention when the first pin is located on third projections of the holding potions.
FIG.18A is a graph showing load-characteristics of the coupling member relating to the second embodiment of the present invention.
FIG.18B is a graph showing load-characteristics of the coupling member relating to the first embodiment of the present invention.
FIG.19 is an enlarged plan view of the main portion of a coupling member relating to a first modification of the second embodiment of the present invention.
FIG.20 is an enlarged plan view of the main portion of a coupling member relating to a second modification of the second embodiment of the present invention.
FIG.21 is a plan view of a coupling member relating to a third modification of the second embodiment of the present invention.
FIG.22 is an exploded perspective view of a power transmission device relating to a third embodiment of the present invention.
FIG.23 is a side view of the main portion of the power transmission device relating to the third embodiment of the present invention.
FIG.24 is a cross-sectional view sectioned along the XXIV-XXIV line in FIG.23.

### Best Mode for Carrying Out the Invention

A first to a third embodiment of the present invention will be described. Besides, an X-axis, a Y-axis and a Z-axis are set in the longitudinal direction, the lateral direction and the vertical direction of a compressor, respectively. The X-axis, the Y-axis and the Z-axis are perpendicular to one another.

### (First Embodiment)

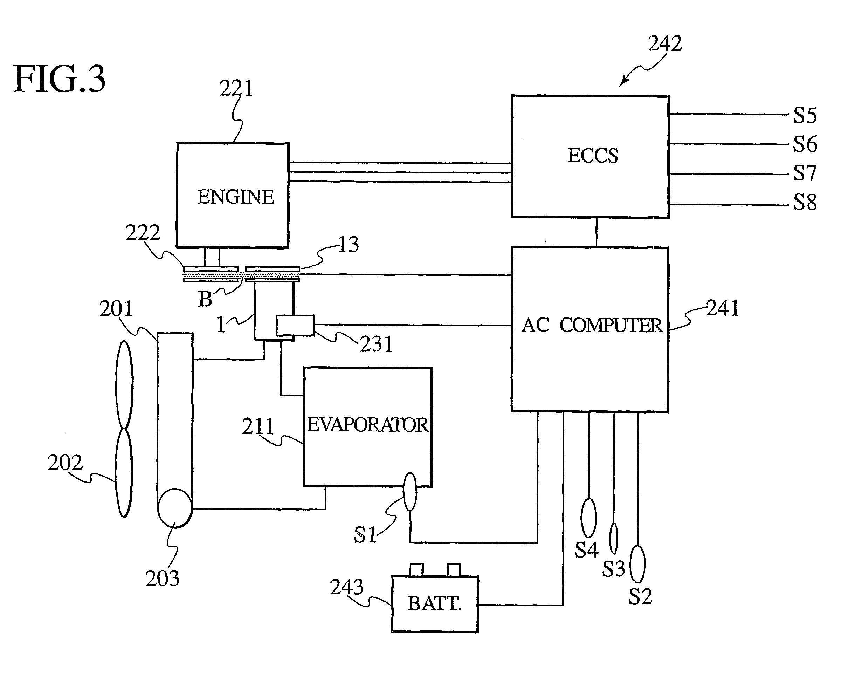

The first embodiment will be described referring to FIGS.3 to 14.

As shown in FIG.3, an air conditioning system for vehicle includes a refrigeration-cycle and a controller. The refrigeration-cycle includes a clutchless compressor 1, a condenser 201 and an evaporator 211. The compressor 1 is driven by an engine 221 to compress a vaporized refrigerant.

The condenser 201 liquefies the compressed refrigerant and has a cooling fan 202 and a liquid tank 203. The evaporator 211 vaporizes the liquefied refrigerant. The vaporized refrigerant is sucked in the compressor 1 from the evaporator 211.

The controller includes an AC computer 241 and ECCS (electronic concentrated engine control system) 242. The AC computer 241 is driven by a battery 243 and obtains information from sensors S1, S2, S3 and S4. The sensor S1 detects a temperature at the outlet of the evaporator 211. The sensor S2 detects an internal temperature of the vehicle. The sensor S3 is a solar radiation sensor. The sensor S4 detects an external temperature of the vehicle. The AC computer 241 controls an electronic control valve 231 mounted to the compressor 1 on the basis of information from the sensors S1, S2, S3 and S4.

The ECCS 242 obtains information from sensors S5, S6, S7 and S8. The sensor S5 detects the speed of the vehicle. The sensor S6 detects the opening rate of an accelerator. The sensor S7 detects the rotational speed of a wheel or an axle. The sensor S8 detects a suction air pressure of the engine 221. The ECCS 242 controls the engine 221 on the basis of information from the sensor S5, S6, S7 and S8.

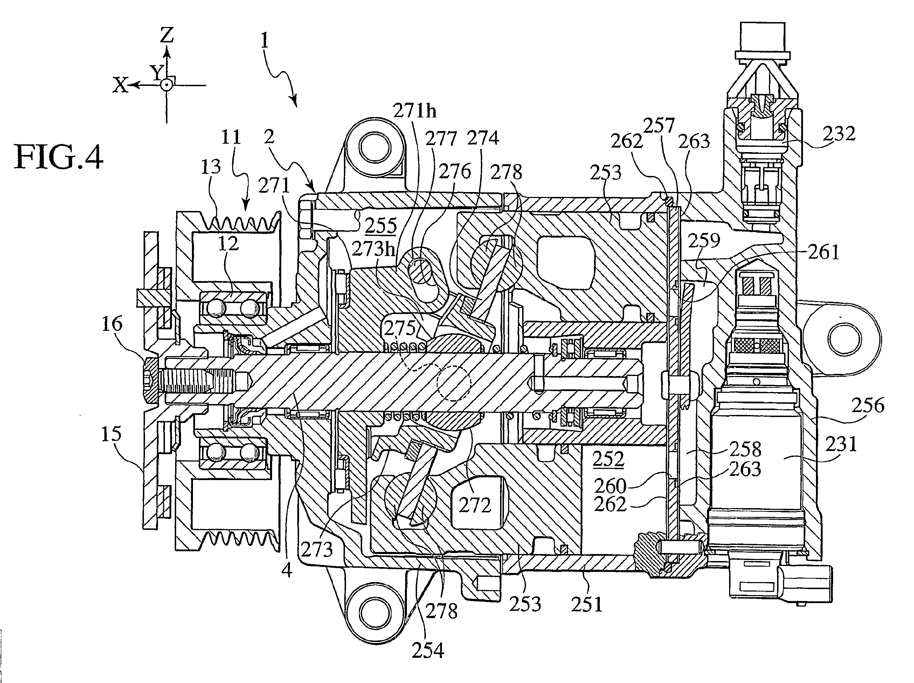

As shown in FIG.4, the compressor 1 includes a housing 2, a rotary shaft 4 and a power transmission device 11. The housing 2 has a cylinder block 251, a front housing 254 and a rear housing 256.

The cylinder block 251 defines a plurality of cylinder bores 252. A plurality of cylinders 253 are slidably accommodated in the cylinder bores 252 in the axial direction (the X-axis), respectively. The front housing 254 is connected to the +X side of the cylinder block 251 to define a crank chamber 255 adjacent to the cylinder block 251. The rear housing 256 is connected to the -X side of the cylinder block 251 via a valve plate 257 to define suction chambers 258 and discharge chambers 259. The valve plate 257 has inlets 260 communicating with the suction chambers 258 and the cylinder bores 252 and outlets 261 communicating with the discharge chambers 259 and the cylinder bores 252. The inlets 260 and the outlets 261 are covered with suction plates 262 and discharge plates 263, respectively.

The crank chamber 255 includes a drive plate 271, a sleeve 272, a journal 273 and a swash plate 274 therein. The drive plate 271 is fixedly mounted on the rotary shaft 4. The sleeve 272 is slidably fitted with the rotary shaft 4. The journal 273 is swingably connected to the sleeve 272 through a pin 275. The swash plate 274 is fixed to the end of the journal 273.

The drive plate 271 and the journal 273 have hinge arms 271h, 273h, respectively, that are connected to one another by means of an elongated slot 276 and a pin 277, thereby restricting a swing motion of the swash plate 274. The cylinders 253 are connected to the swash plate 274 through a pair of shoes 278 between which the swash plate 274 is sandwiched, resulting in reciprocating movements of the cylinders 253 on the basis of motive power caused by rotational movement of the rotary shaft 4.

Thus, the compressor 1 has a basic function in that reciprocating movements of the cylinders 253 sucks refrigerant in a path through the evaporator 211 → the suction chambers 258 → the inlets 260 → the cylinder bores 252 and compresses sucked refrigerant whereupon compressed refrigerant is discharged in a path through the cylinder bores 252 → the outlets 261 → the discharge chambers 259 → the condenser 201.

The rear housing 256 includes the electronic control valve 231 and a check valve 232 therein. The electronic control valve 231 feeds a part of compressed refrigerant in the discharge chamber 259 to the crank chamber 255 in order to regulate pressure in the crank chamber 255. The swash plate 274 is controlled at an inclined angle by differential pressure between the suction chambers 258 and the crank chamber 255. The angle change of the swash plate 274 changes stroke of each cylinder 253, which changes discharge volume of a refrigerant.

The rotary shaft 4 has an end portion 4a passing loosely through a boss portion 3, which is formed on the +X side of the front housing 254. The boss portion 3 is coaxial with the rotary shaft 4.

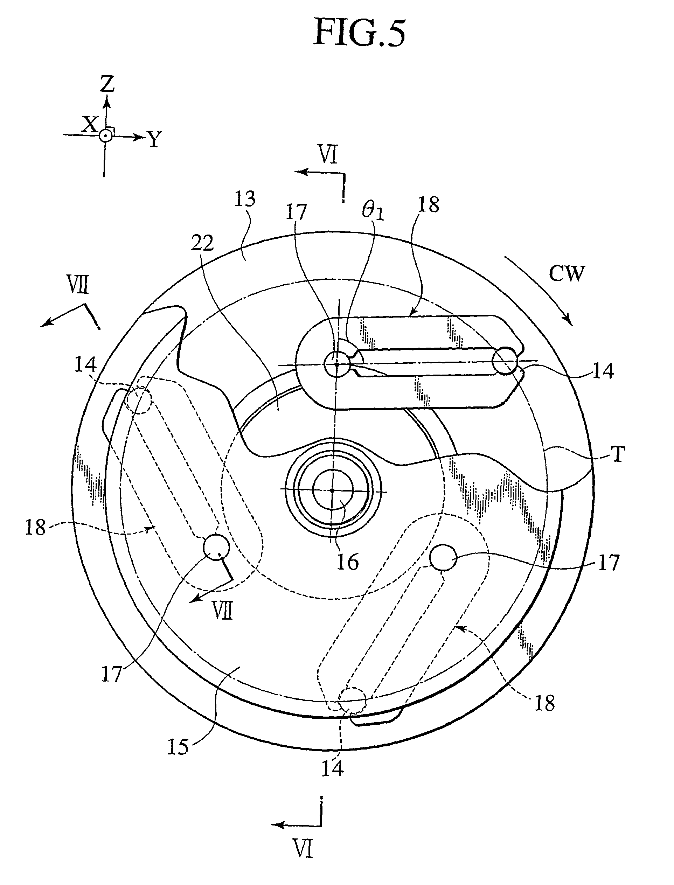

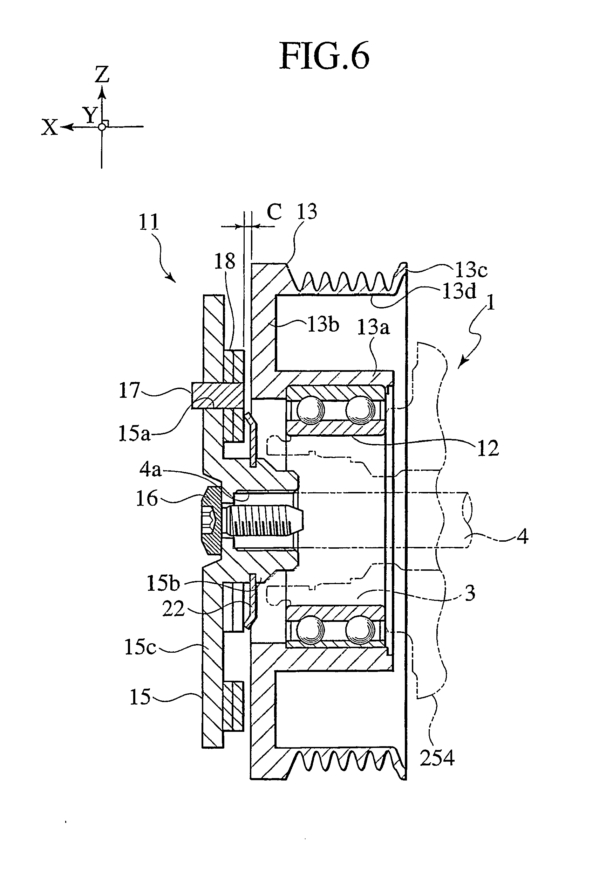

As shown in FIGS.5 and 6, the power transmission device 11 comprises a bearing 12, a pulley 13, plural first pins 14, a hub 15, a bolt 16, plural second pins 17, plural coupling members 18 and a linking mean 22.

The pulley 13 is rotatably attached to the boss portion 3 via the bearing 12. The pulley 13 has an inner cylinder portion 13a, a joint portion 13b and an outer cylinder portion 13c. The inner cylinder portion 13a is formed in the shape of a cylinder and is coaxial with the rotary shaft 4. The joint portion 13b is formed, in the shape of a round ring, integrally on the outside surface of a first end (+X side) of the inner cylinder portion 13a and protrudes outward in the radial direction of the inner cylinder portion 13a. The outer cylinder portion 13c is formed, in the shape of a cylinder, integrally at the circumferential end of the joint portion 13b and is coaxial with the rotary shaft 4. The outer cylinder portion 13c has an outside surface on which a plurality of V grooves are formed for winding the belt B on them. The belt B is coupled with a pulley 222 of the engine 221(refer to FIG.3). The pulley 13 has an annular recess 13d is formed by the outside surface of the inner cylinder portion 13a, the end surface on the
- X side of the joint portion 13b and the inside surface of the outer cylinder portion 13c. The recess 13d is open in the -X direction.

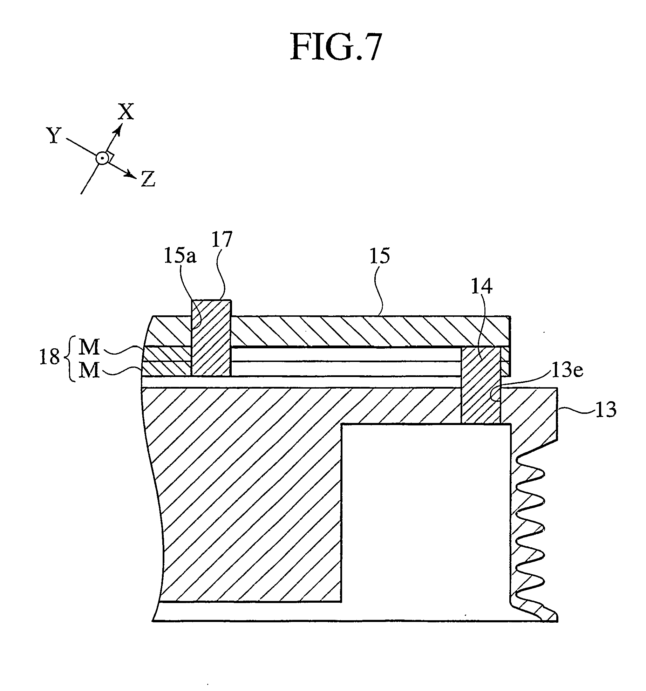

As shown in FIGS.5 and 7, the joint portion 13b of the pulley 13 has a periphery on which a plurality of pin-insertion holes 13e are formed. The pin-insertion holes 13e are disposed along the same circumference whose center coincides with the axis of the joint portion 13b. Each of the pin-insertion holes 13e is located a regular angle apart from the adjacent ones 13e. In the case of the present embodiment, three pin-insertion holes 13e are located 120° apart from one another on the periphery of the joint portion 13b.

The first pins 14 are formed in the shape of a cylinder. Each of the first pins 14 is passed through and fitted into one of the pin-insertion holes 13e formed on the periphery of the joint portion 13b, and is arranged on the +X side periphery of the joint portion 13b in a standing condition.

The hub 15 is fixed to the end portion 4a of the rotary shaft 4 with the bolt 16. The hub 15 is coaxial with the rotary shaft 4. Further, the hub 15 has a periphery on which a plurality of pin-insertion holes 15a are formed. The pin-insertion holes 15a are disposed along the same circumference whose center coincides with the axis of the hub 15. Each of the pin-insertion holes 15a is located a regular angle apart from the adjacent ones 15a. In the case of the present embodiment, three pin-insertion holes 15a are located 120° apart from one another on the periphery of the hub 15.

The second pins 17 are formed in the shape of a cylinder. Each of the second pins 17 is passed through and fitted into one of the pin-insertion holes 15a. The second pin 17 is coupled with the first pin 14 via the coupling member 18. In the case of the present embodiment, a power-transmission cutoff member is composed of the first pins 14, the second pins 17 and the coupling members 18.

The coupling member 18 is made of spring material such as high carbon steel, and is of a forked leaf spring which is substantially U-shaped. In particular, as shown in FIG.7, the coupling members 18 are manufactured by stacking a plurality of sheets punched out of plate material M such as high carbon steel into the shape of the letter U. Additionally, the coupling member 18 may be made of a monolithic sheet of the plate material M. In the case of the present embodiment, two sheets of the plate material M are stacked. By employing the above manufacturing method, not only productivity is enhanced but also burrs, deformations, etc. are hardly yielded because punching can be easily performed. Therefore, spring load of the coupling members 18 becomes stable.

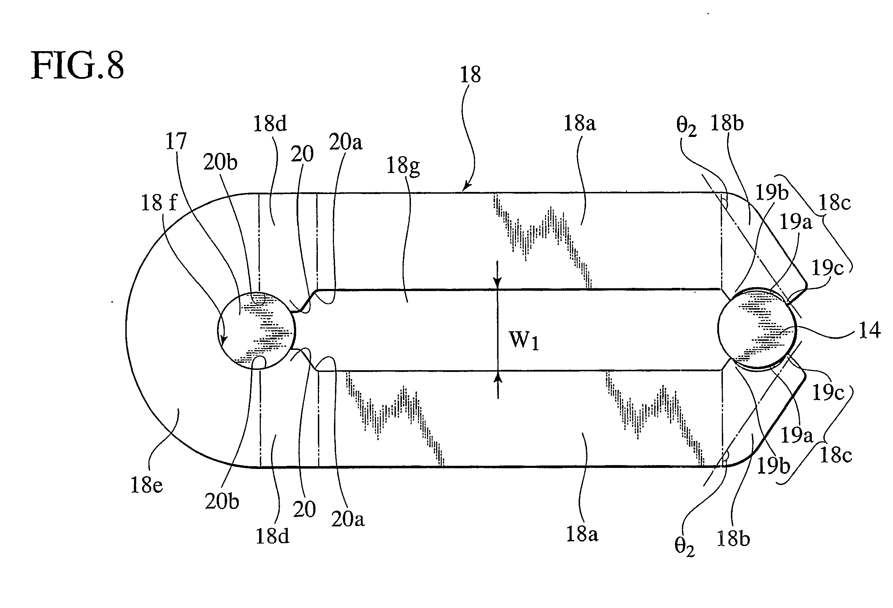

As shown in FIG.5, the coupling members 18 are arranged between the pulley 13 and the hub 15 so as to cross at an acute angle (θ 1 < 90°) to the radial direction of the pulley 13 and the hub 15. As shown in FIG.8, the coupling member 18 has a pair of sidepiece portions 18a, a pair of bent portions 18b, a pair of sandwich portions 18c, a pair of joining portions 18d, a curved portion 18e, a through-hole 18f and a spacing 18g. The first pin 14 inserted into the pin-insertion hole 13e is sandwiched between the sandwich portions 18c, 18c. The second pin 17 inserted into the pin-insertion hole 15a is fitted into the through-hole 18f. The sidepiece portions 18a, 18a are formed in the shape of a rectangle and are disposed parallel to each other.

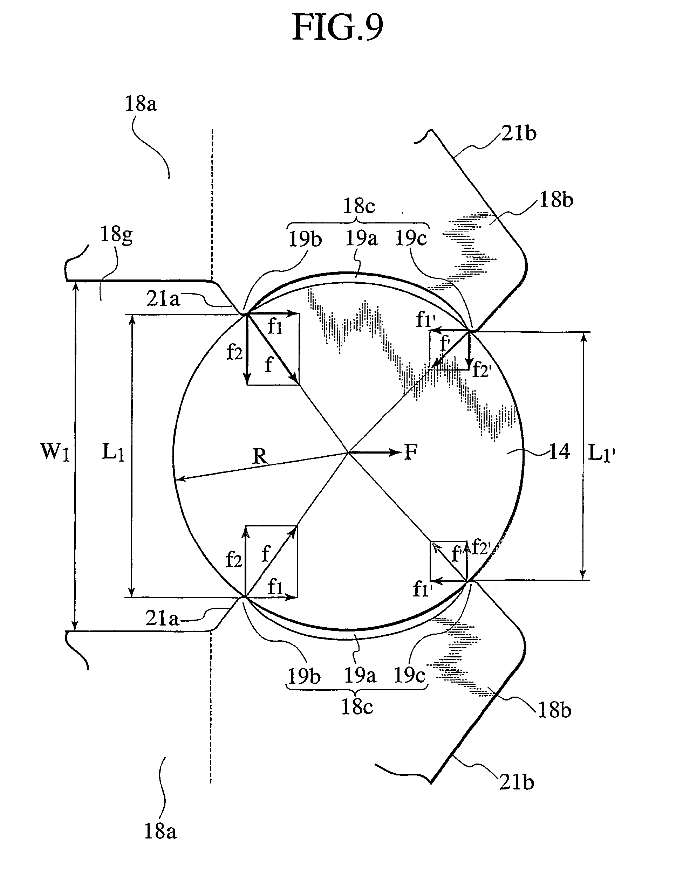

The bent portions 18b, 18b are bent at a given angle θ 2 to the sidepiece portions 18a, 18a, and are configured to extend from first ends of the sidepiece portions 18a, 18a respectively, so as to come close to each other. As shown in FIG.9, the bent portions 18b, 18b have inside surfaces 19a, 19a, first projections 19b, 19b and second projections 19c, 19c, respectively. Curvature of each inside surface 19a is larger than that of the first pin 14. It should be noted that the curvature of each inside surface 19a may be equal to or less than that of the first pin 14 if the inside surface 19a does not contact with the outside circumferential surface of the first pin 14. The first projection 19b and the second projection 19c are provided at both end portions of the inside surface 19a, and are formed in the round shape. The inside surface 19a is formed on the bent portion 18b in the press working with diameter which is smaller than that of the first pin 14. An inside surface 21a and an outside surface 21b of the bent portion 18b is substantially parallel to each other.

With regard to a pair of the bent portions 18b, the first projection 19b and the second projection 19c of one bent portion 18b are respectively opposite to the first projection 19b and the second projection 19c of the other bent portion 18b at a given distance from each other. A distance L1 between the first projections 19b, 19b is larger than a distance L1' between the second projections 19c, 19c. Further, the distance L1 is of the length between the first projections 19b, 19b to support one side of the first pin 14 by sandwiching in stress less than elastic limit of the bent portions 18b, 18b. Further, the coupling member 18 holds the first pin 14 via the sandwiching portions 18c, 18c by acting an adequate elastic force thereof.

The sandwich portions 18c, 18c are formed by the inside surfaces 19a, 19a, the first projections 19b, 19b and the second projections 19c, 19c provided in the bent portions 18b, 18b. In a state where the sandwich portions 18c, 18c support the first pin 14 by sandwiching, the first projections 19b, 19b and the second projections 19c, 19c are point-contacted with the outside circumferential surface of the first pin 14 in the plan view of the coupling member 18, and line-contacted with the outside circumferential surface of the first pin 14 in the cross-sectional view of the coupling member 18. Also, the outside circumferential surface of the first pin 14 is opposite to the inside surfaces 19a, 19a at a given distance from the inside surfaces 19a, 19a.

The joining portions 18d, 18d are configured to extend from second ends of the sidepiece portions 18a, 18a, and arranged to be parallel to each other. The curved portion 18e is formed in the shape of a semicircular ring. The second end of one sidepiece portion 18a is joined integrally to the first end of the curved portion 18e via one joining portion 18d. And, the second end of the other sidepiece portion 18a is joined integrally to the second end of the curved portion 18e via the other joining portion 18d.

Protrusions 20, 20 are formed on the inside surfaces of the joining portions 18d, 18d, respectively. One protrusion 20 is opposite to the other protrusion 20 at a given distance from the other protrusion 20. A first slant 20a of the protrusion 20 positioned on the sidepiece 18a side is convex outward, and a second slant 20b of the protrusion 20 positioned on the curved portion 18e side are concave inward. Each of the second slants 20b, 20b is smoothly joined to the inside surface of the curved portion 18e. In the plan view of the coupling member 18, both the second slants 20b, 20b and the inside surface of the curved portion 18e are located on the same circumference.

The through-hole 18f is formed by the second slants 20b, 20b of the joining portions 18d, 18d and the inside surface of the curved portion 18e. The second pin 17 is passed through and fitted into the through-hole 18f.

The spacing 18g is formed between the sidepiece portions 18a, 18a, and between the first slants 20a, 20a of the protrusions 20, 20 of the joining portions 18d, 18d. The width W1 of the spacing 18g is larger than the distances L1, L1' and slightly larger than a diameter of the first pin 14. Hollow portions of the sandwich portions 18c, 18c and the through-hole 18f are communicated with the spacing 18g.

The linking means 22 presses the coupling member 18 against the hub 15. As shown in FIG.6, the linking means 22 is of a washer-like resilient member concentrically mounted on the outside circumferential surface of an axial portion 15b of the hub 15. The linking means 22 has an end portion bent toward a flange portion 15c of the hub 15. The coupling member 18 is slidably pressed against the rear surface of the flange portion 15c of the hub 15 by means of the linking mans 22 and is linked to the hub 15.

A given gap (width C) as a clearance should be provided between the pulley 13 and the coupling member 18. Since the linking means 22 presses the coupling member 18 against the hub 15, the clearance larger than the given gap can be easily secured.

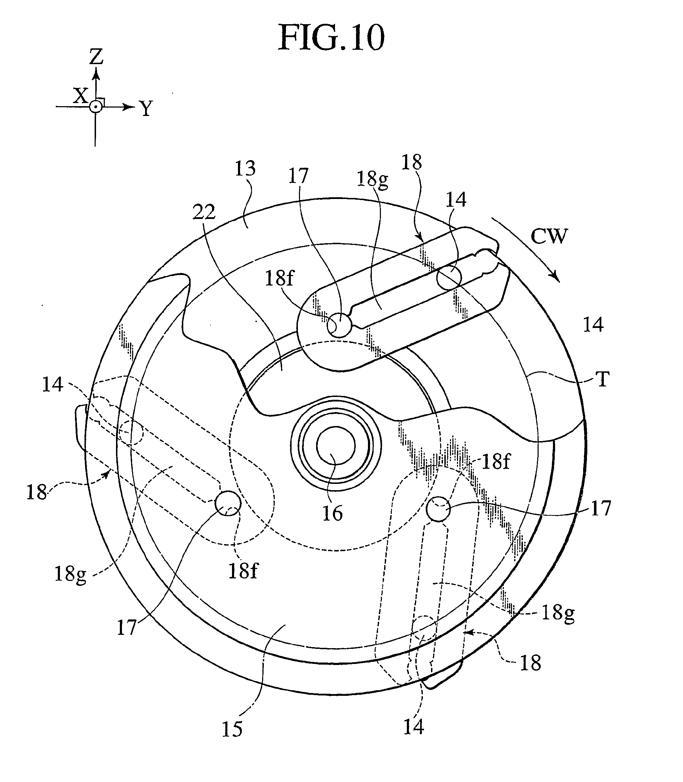

In the following, a method of coupling the first pin 14 and the second pin 17 on the coupling member 18 will be described referring to FIGS.5 and 10.

First, each second pin 17 is inserted into each of the pin-insertion holes 15a of the hub 15. Second, after inserting each end portion of the second pin 17 into each of the through-holes 18f of the coupling members 18, the linking means 22 is fitted on the axial portion 15b of the hub 15. Then, by means of fastening the linking means 22 in a groove provided around on an outside circumferential surface of the axial portion 15b, the coupling member 18 is linked with the hub 15.

Next, each first pin 14 is inserted into each of the pin-insertion holes 13e of the pulley 13 to make an end portion of the first pin 14 protrude from the front surface of the joint portion 13b of the pulley 13. Then, after inserting each end portion of the first pin 14 into each spacing 18g of the coupling members 18, the hub 15 is fixed to the end portion 4a of the rotary shaft 4 with the bolt 16 (refer to FIG. 10).

Next, while fastening the hub 15 so as not to be rotated, the first pin 14 moves toward an open end (the sandwich portions 18c, 18c) side of the spacing 18g by rotating the pulley 13 in the direction of an arrow CW (clockwise when viewing in the direction of +X). As the pulley 13 is rotated further in the direction of the arrow CW, the first pin 14 presses the first projections 19b, 19b via outside surface thereof to make the whole coupling member 18 deform elastically and to gradually broaden the distance L1 between the sandwich portions 18c, 18c. Consequently, the first pin 14 is entered between the sandwich portions 18c, 18c and then the outside surface of the first pin 14 is opposite to the inside surfaces 19a, 19a of the sandwich portions 18c, 18c. When the pulley 13 is stopped in the preceding situation, the first projections 19b, 19b and the second projections 19c, 19c are pressed against the outside surface of the first pin 14, thereby the first pin 14 is sandwiched between the sandwich portions 18c, 18c (refer to FIG.5).

The first pin 14 is received in the spacing 18g and free to move in the width direction of the spacing 18g because the width W1 of the spacing 18g of the coupling member 18 is slightly larger than the diameter of the first pin 14. Therefore, the first pin 14 moves smoothly toward the sandwich portions 18c, 18c as the pulley 13 rotates.

In the following, functions of the power transmission device 11 and the coupling member 18 will be described referring to FIGS.11A to 11E.

When a torque load on the coupling member 18 is smaller than a given value, power of the engine is transmitted via the belt sequentially to, the pulley 13, the first pins 14, the coupling members 18, the second pins 17 and the hub 15, and the power makes the rotary shaft 4 rotate.

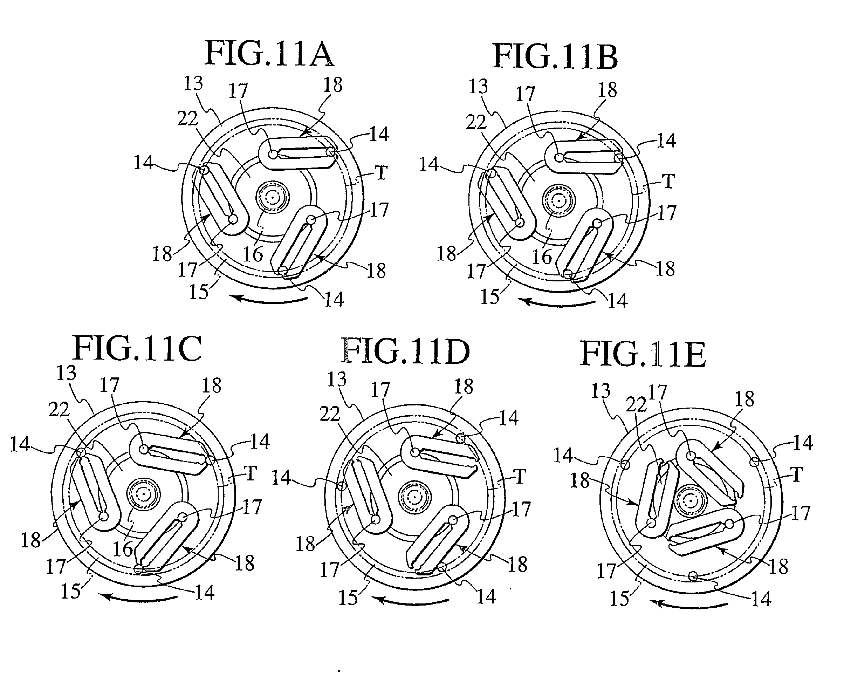

When a torque overload is generated in the compressor 1, a torque load is applied onto the coupling member 18 (refer to FIG.11A). If the torque load exceeds the given value, the first pin 14 deforms the coupling member 18 via the second projections 19c, 19c as the pulley 13 rotates, and then the first pin 14 is released from the coupling member 18 (refer to FIG.11B). At this time, the coupling member 18 crosses at about right angle (θ1 ≒ 90° ) to the radial direction of the pulley 13 and the hub 15. Through the above mechanism, the power transmission from the pulley 13 to the rotary shaft 4 is cut off, and the pulley 13 will run idle.

After the first pin 14 has been released from the coupling member 18, the coupling member 18 stays on the movement locus T of the first pin 14 (refer to FIG.11C). However, the coupling member 18 pivots inward from the movement locus T around the second pin 17 as sliding on the linking means 22, due to collision between the coupling member 18 and the first pin 14 revolving along the movement locus T as the pulley 13 rotates (refer to FIGS.11D and 11E). Consequently, the coupling member 18 is linked in the region where preventing the coupling member 18 from interfering with the movement of the first pin 14. Therefore, even though the pulley 13 continues to rotate, the first pin 14 does not collide again with the coupling member 18 after the first pin 14 has collided only once with the coupling member 18 and so generation of noises can be prevented.

In the following, in order to explain time-change of reaction force acting from the coupling member 18 to the first pin 14 in the above release process, described will be the case where force F acts axially on the coupling member 18 in a state where the first pin 14 is sandwiched between the sandwich portions 18c, 18c.

As shown in FIG.9, through sandwiching the first pin 14 between the sandwich portions 18c, 18c, reaction forces f, f' from the first projection 19b and the second projection 19c act on the outside surface of the first pin 14. Further, the reaction forces f, f' act along the lines joining the center of the first pin 14 and the first projection 19b, the second projection 19c, respectively. In the case where force F acting on the open end side of the coupling member 18 (in the horizontal direction) does not act on the first pin 14, a horizontal component f1 of the reaction force f is equal to a horizontal component f1' of the reaction force f', but acts in the opposite direction of the component f1'. At this time, vertical components f2, f2' of the reaction forces f, f' on one hand are equal to vertical components f2, f2' of the reaction forces f, f' on the other hand, but acts in the opposite direction of the vertical components f2, f2' on the other hand.

Once the force F acts on the first pin 14, the first pin 14 is pressed against the second projections 19c, 19c, and as a result the horizontal component f1 will become smaller and the horizontal component f1' will become larger at the same time. When the first pin 14 is pressed against the second projections 19c, 19c in a state where the first pin 14 contacts to the first projections 19b, 19b, the following relationship holds: F + 2f1 = 2f1'. When the first pin 14 is pressed against the second projections 19c, 19c in a state where the first pin 14 is apart from the first projections 19b, 19b, the following relationship holds: f1 = 0, F = 2f1'.

When the force F exceeds the given value, the first pin 14 deforms the coupling member 18 to broaden the distance L1' between the sandwich portions 18c, 18c through pressing the second projections 19c, 19c by means of the outside surface thereof. Further, when the force F increases, the first pin 14 is released from the sandwich portions 18c, 18c after the distance L1' is equal to the diameter of the first pin 14.

In the above release process, force (pull-out load) acting from the first pin 14 to the coupling member 18 is maximized when the coupling member 18 crosses at a right angle (θ1= 90° ) to the radial direction of the pulley 13 and the hub 15.

When the engine 221 stops, the pulley 13 stops rotating but the hub 15 momently rotates by inertia force. At this time, the first pin 14 slightly moves toward a basic end (the spacing 18g) side of the sandwich portions 18c, 18c and then applies load to the first projections 19c, 19c. The first projections 19c, 19c are designed so as to bear the applied load.

The power transmission device 11 has the following features.

Since the coupling member 18 is made of a spring material, it is hardly subjected to aging.

Since the curvature of each inside surface 19a is larger than that of the first pin 14, the first projections 19b, 19b and the second projections 19c, 19c are press-contacted with the outside circumferential surface of the first pin 14, in a state where the first pin 14 is sandwiched between the sandwich portions 18c, 18c. Therefore, contact area between the first pin 14 and the coupling member 18 is suppressed to a minimum. As a result, the coupling member 18 can support the first pin 14 by sandwiching without being rickety, which suppresses displacement of sandwiching position to a minimum. Also, generation of noise and wear can be suppressed to a minimum.

When the number of revolutions of the hub 15 is smaller than that of the pulley 13 and a torque load exceeding a given value is applied to the coupling member 18, the first pin 14 will be released from the coupling member 18. Further, since the contact area between the first pin 14 and the coupling member 18 in the present embodiment is smaller than a contact area between a rolling ball and a buffer rubber in a conventional power-transmission cutoff member, preventing the force (pull-out load), which is required for releasing the first pin 14 out of the coupling member 18, from suffering from the age-degradation of the coupling member 18. Therefore, power transmission is always cut off at a constant torque load.

Since each of the coupling members 18 is arranged at a regular angle apart from the adjacent ones 18, torque loads applied on the coupling members 18 are equal to one another. Therefore, power transmission is always cut off at a constant torque load.

When the first pin 14 is released from the coupling member 18, the coupling member 18 substantially crosses at a right angle to the radial direction of the pulley 13 and the hub 15. Therefore, arrangement space of the coupling member 18 can be reduced in size.

The difference in the distance L1 between the first projections 19b, 19b and the diameter of the first pin 14 is smaller than the difference in the distance L1' between the second projections 19c, 19c and the diameter of the first pin 14. Therefore, for the first pin 14, it is easy to entry between the sandwich portions 18c, 18c from the spacing 18g and difficult to go out of the sandwich portions 18c, 18c to the exterior of the coupling member 18, consequently the assembling operation can be performed easier than the conventional assembling operation, and force for sandwiching the first pin 14 is easily ensured.

Since assembling operation of the power-transmission cutoff member is completed only by fitting the first pin 14 and the second pin 17 into the sandwich portions 18c, 18c and through-hole 18f, respectively, the assembling operation can be performed easier than the conventional assembling operation. Consequently, enhancement of productivity is realized:

Since the spacing 18g communicates with the hollow portion of the sandwich portions 18c, 18c, the first pin 14 enters between the sandwich portions 18c, 18c while deforming the coupling member 18. Therefore, no auxiliary members for assembling the power-transmission cutoff member are required, and consequently miniaturization of the device is realized.

Once the rotary shaft 4 stops rotating due to occurrence of burn-in, etc. in the interior of the compressor 1, the power transmission is cut off through releasing the first pin 14 from the coupling member 18. Therefore, since the coupling member 18 does not rotate, the operator is protected from being injured through collision with the coupling member 18 and so forth.

In the following, a first to a fourth modification of the present embodiment will be described.

### (First Modification)

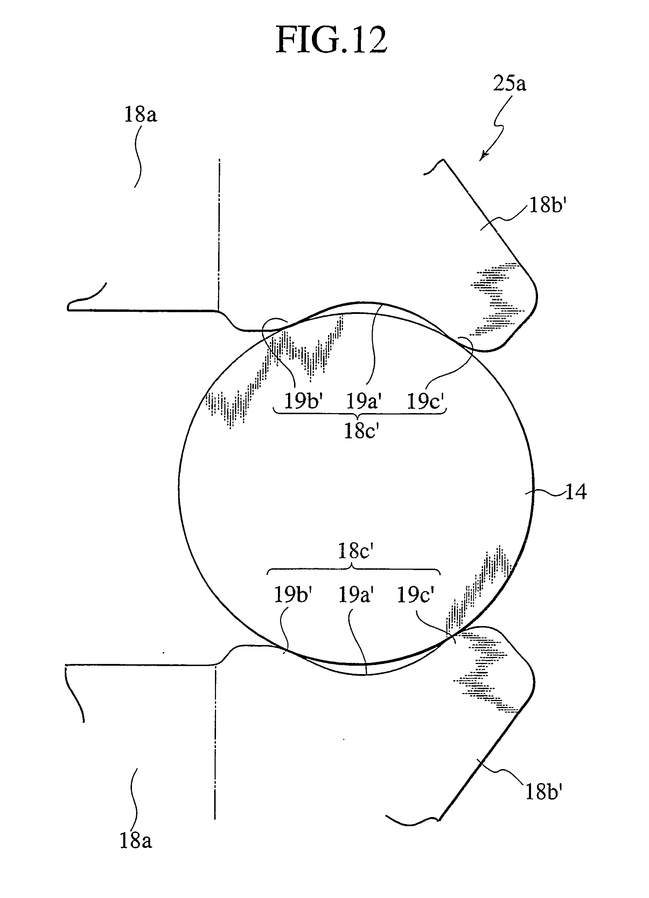

As shown in FIG.12, sandwich portions 18c',18c' of a coupling member 25a is formed by inside surfaces 19a', 19a', first projections 19b', 19b' and second projections 19c', 19c'. Curvature of each inside surface 19a' is larger than that of the first pin 14. The first projection 19b' and the second projection 19c' are provided at both end portions of each inside surface 19a'. Curvatures of the first projection 19b' and the second projection 19c' are smaller than those of the first projection 19b and the second projection 19c. According to the above constitution, since contact area between the first pin 14 and the coupling member 25a is slightly larger than that between the first pin 14 and the coupling member 18, the first pin 14 can be securely sandwiched by the sandwich portions 18c, 18c.

### (Second Modification)

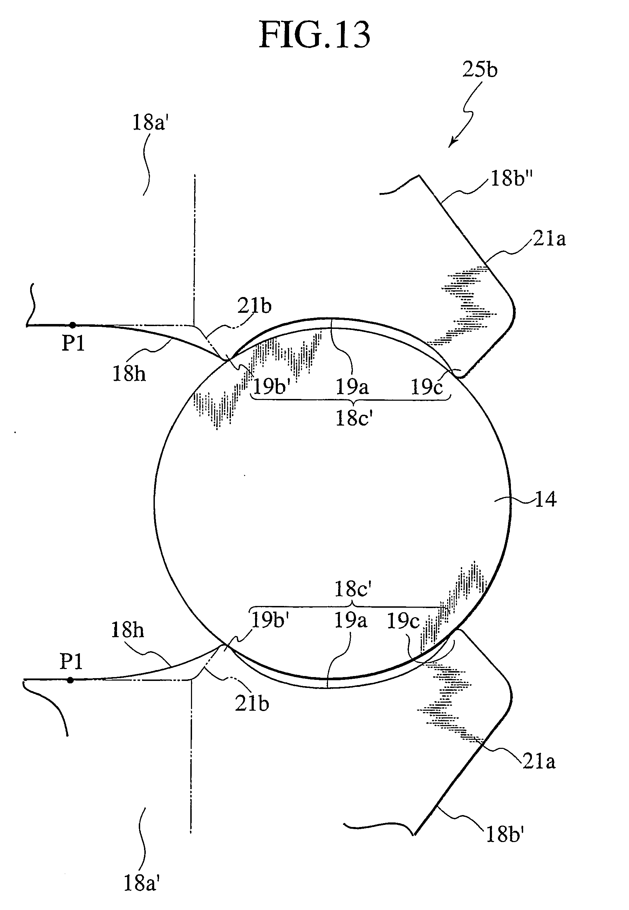

As shown in FIG.13, in a sidepiece portion 18a' and a bent portion 18b" of a coupling member 25b, a first projection 19b" is smoothly joined to the inside surface of the sidepiece portion 18a'. Concretely, a slope 18h is formed gently from the given position P1 on the open end side of the inside surface of the sidepiece portion 18a' to the top of the first projection 19b". According to the above constitution, when the first pin 14 is coupled to the coupling member 25b, the first pin 14 is inserted between sandwich portions 18c", 18c" under the guidance of the slopes 18h, 18h as the pulley 13 rotates. Therefore, operation of coupling the first pin 14 to the coupling member 25b can be simply performed.

### (Third Modification)

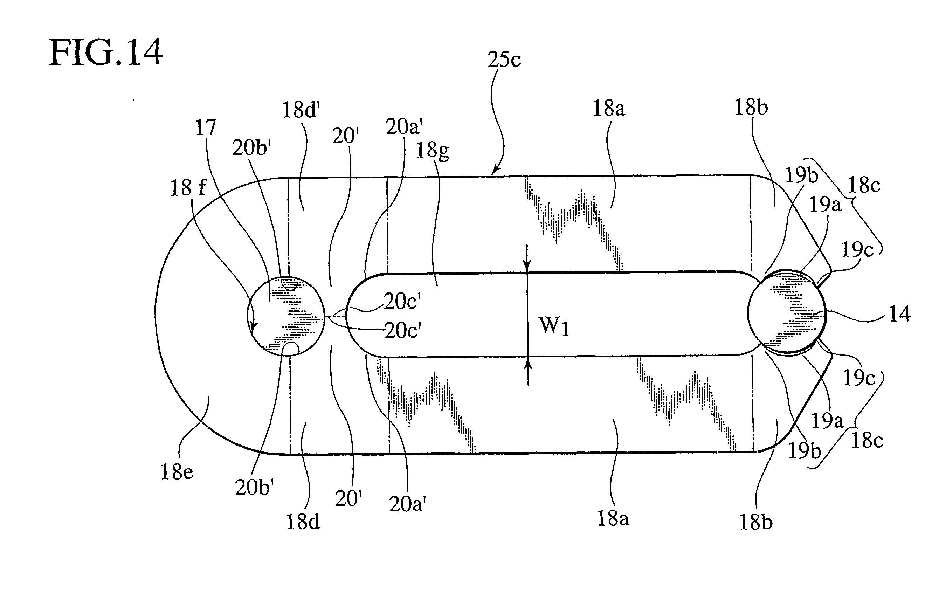

As shown in FIG. 14, a through-hole 18f'is disposed separately from a spacing 18g' by joining together protrusions 20', 20' of joining portions 18d', 18d' of a coupling member 25c. Each protrusion 20' has a first slant 20a', a second slant 20b' and a flat surface 20c'.

The first slants 20a', 20a' are joined to each other and also joined to inside surfaces of sidepiece portions 18a, 18a, respectively. The first slants 20a', 20a' form a semicircle with a diameter W1. The second slants 20b', 20b' are joined to each other and also joined to an inside surface of a curved portion 18e. In the plan view of the coupling member 25c, the through-hole portion 18f is formed by the second slants 20'b, 20'b and the inside surface of the curved portion 18e to be isolated from the spacing 18g'. The flat surfaces 20c', 20c' are disposed parallel to the axial direction of the coupling member 25c and are joined together. Each flat surface 20c' connects the first slant 20a' to the second slant 20b'. According to the above constitution, releasing of the second pin 17 from coupling member 25c can be securely avoided.

### (Fourth Modification)

With regard to a spacing 18g of the coupling member 18, the width W1 of the spacing 18g is larger than the distance L1, L1' and also larger than the diameter of the first pin 14. According to the above constitution, the first pin 14 can be easily inserted into the spacing 18g when the first pin 14 is coupled with the coupling member 18. Therefore, operation of coupling the first pin 14 to the coupling member 18 can be simply performed.

Other than the above modifications, various modifications can be carried out without departing from the essential characteristics of the present invention.

For example, the first pin 14 sandwiched between the sandwich portions 18c, 18c may be disposed in the hub 15, and the second pin 17 passed through and fitted into the through-hole 18f may be disposed in the pulley 13.

Moreover, the coupling member 18 may be made of a plastically deformable material. Accordingly, the coupling member 18 can be more miniaturized than the case where the coupling member 18 is elastically deformed when the first pin 14 is released from the coupling member 18. Therefore, miniaturization of the whole device will be realized and design will also be easier.

Further, in the above release process, force (pull-out load) acting from the first pin 14 to the coupling member 18 may be maximized when the coupling member 18 crosses at 85° to 95° to the radial direction of the pulley 13 and the hub 15.

### (Second Embodiment)

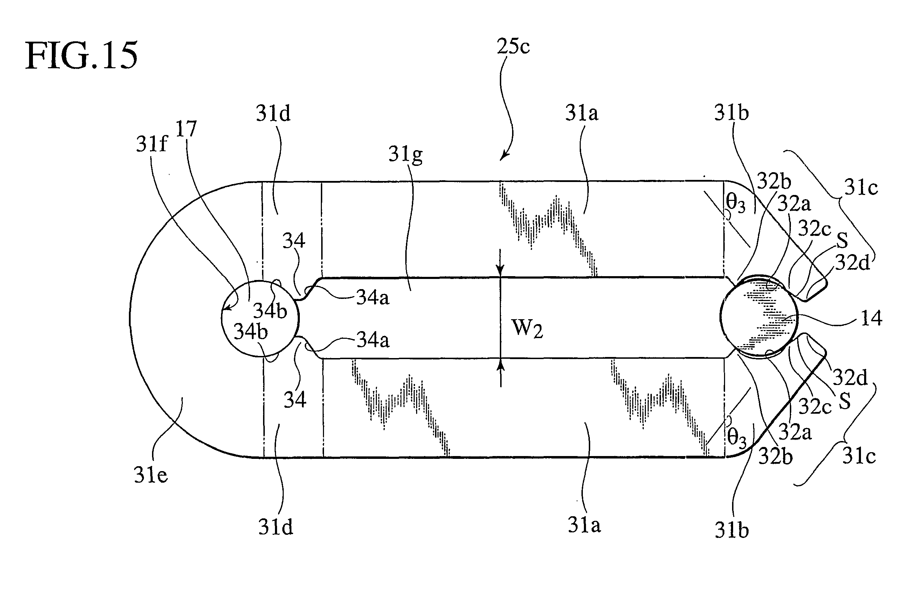

Referring to FIGS.15 to 19, the second embodiment will be described below. The same members as those in the constitution of the first embodiment are given the same numerals. The second embodiment is different from the first embodiment in the constitution of the coupling member.

A coupling member 31 is made of bearing steel material such as SUJ, and is of a forked leaf spring which is substantially U-shaped. A manufacturing method of the coupling member 31 is the same as the manufacturing method of the coupling member 18.

The coupling members 31 are arranged between the pulley 13 and the hub 15 so as to cross at an acute angle to the radial direction of the pulley 13 and the hub 15. As shown in FIG.15, the coupling member 31 has a pair of sidepiece portions 31a, a pair of bent portions 31b, a pair of holding portions 31c, a pair of joining portions 31d, a curved portion 31e, a through-hole 31f and a spacing 31g. The first pin 14 inserted into the pin-insertion hole 13e is held by the holding portions 31c, 31c. The second pin 17 inserted into the pin-insertion hole 15a is fitted into the through-hole 31f.

The sidepiece portions 31a, 31a are formed in the shape of a rectangle and are disposed parallel to each other.

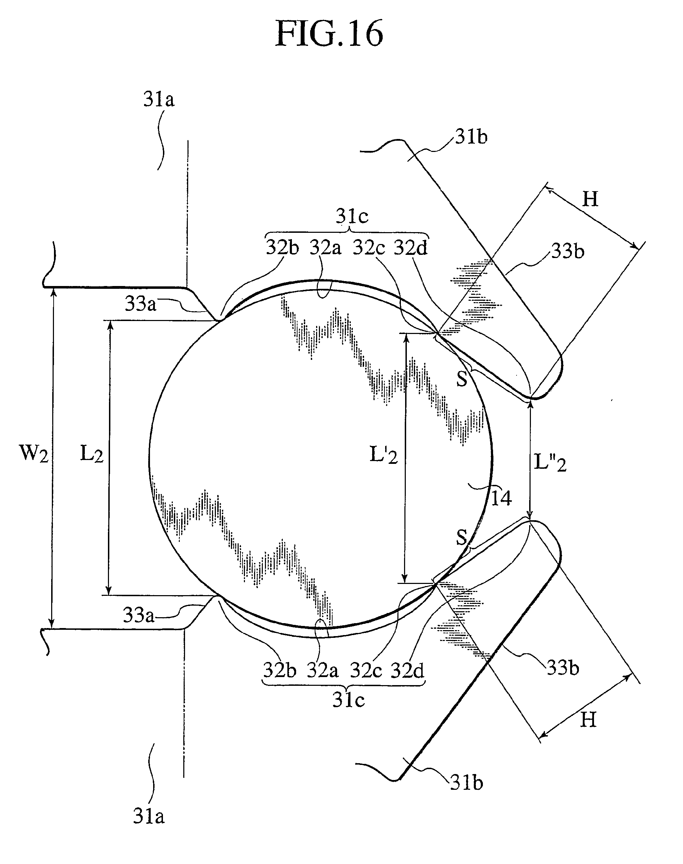

The bent portions 31b, 31b are bent at a given angle θ 3 to the sidepiece portions 31a, 31a, and are configured to extend from first ends of the sidepiece portions 31a, 31a respectively, so as to come close to each other. The bent portions 31b, 31b have inside surfaces 32a, 32a, first projections 32b, 32b, second projections 32c, 32c, third projections 32d, 32d and holding surface S, S, respectively. Curvature of each inside surface 32a is larger than that of the first pin 14. It should be noted that the curvature of each inside surface 32a may be equal to or less than that of the first pin 14 if the inside surface 32a does not contact with the outside circumferential surface of the first pin 14. The inside surface 32a is formed on a basic end side (the sidepiece portion 31a side) of the bent portion 31b. The first projection 32b and the second projection 32c are provided at both end portions of the inside surface 32a, and are formed in the round shape. In the bent portion 31b, the distance between the first projection 32b and the second projection 32c is equal to that between the first projection 19b and the second projection 19c of the first embodiment. The third projection 32d is provided at a free end side of the bent portion 31b, and joined integrally to the second projection 32c via the holding surface S. As shown in FIG.16, an inside surface 33a and an outside surface 33b of the bent portion 31b is substantially parallel to each other.

With regard to a pair of the bent portion 31b, the first projection 32b, the second projection 32c and the third projection 32d of one bent portion 31b are respectively opposite to the first projection 32b, the second projection 32c and the third projection 32d of the other bent portion 31b at a given distance from each other. A distance L2 between the first projections 32b, 32b is larger than a distance L2' between the second projections 32c, 32c. A distance L2" between the third projections 32d, 32d is smaller than the distance L2'.

The holding portions 31c, 31c is formed by the inside surfaces 32a, 32a, the first projections 32b, 32b, the second projections 32c, 32c, the third projections 32d, 32d and the holding surfaces S, S. In a state where the holding portions 31c, 31c support the first pin 14 by sandwiching, the first projections 32b, 32b and the second projections 32c, 32c are point-contacted with the outside circumferential surface of the first pin 14 in the plan view of the coupling member 31, and line-contacted with the outside circumferential surface of the first pin 14 in the cross-section view of the coupling member 31. Also, the outside circumferential surface of the first pin 14 is opposite to the inside surfaces 32a, 32a at a given distance from the inside surfaces 32a, 32a.

The holding surface S is configured to extend linearly in the tangential direction of the outside circumferential surface of the first pin 14 contacted with the second projection 32c. In a release process, the first pin 14 slides on the holding surface S having a slidable distance H. Additionally, the holding surface S may be configured to curved inward of the holding portions 32c, 32c gently from the outside circumferential surface of the first pin 14 contacted with the second projection 32c.

As shown in FIG.15, the joining portions 31d, 31d are configured to extend from second ends of the sidepiece portions 31a, 31a, and arranged to be parallel to each other. The curved portion 31e is formed in the shape of a semicircular ring. The second end of one sidepiece portion 31a is joined integrally to the first end of the curved portion 31e via one joining portion 31d. And, the second end of the other sidepiece portion 31a is joined integrally to the second end of the curved portion 31e via the other joining portion 31d.

Protrusions 34, 34 are formed on the inside surfaces of the joining portions 31d, 31d, respectively. One protrusion 34 is opposite to the other protrusion 34 at a given distance from the other protrusion 34. A first slant 34a of the protrusion 34 positioned on the sidepiece portion 31a side is convex outward, and a second slant 34b of the protrusion 34 positioned on the curved portion 31e side are concave inward. Each of the second slants 34b is smoothly joined to the inside surface of the curved portion 31e. In the plan view of the coupling member 31, both the second slants 34b, 34b and the inside surface of the curved portion 31e are located on the same circumference.

The through-hole 31f is formed by the second slants 34b, 34b of the joining portions 31d, 31d and the inside surface of the curved portion 31e. The second pin 17 is passed through and fitted into the through-hole 31f.

The spacing 31g is formed between the sidepiece portions 31a, 31a, and between the first slants 34a, 34a of the protrusions 34, 34 of the joining portions 31d, 31d. The distance W2 of the spacing 31g is larger than the distances L2, L2', L2" and slightly larger than a diameter of the first pin 14. Hollow portions of the holding portion 31c, 31c and the through-hole 31f are communicated with the spacing 31g.

In the following, functions of the coupling member 31 will be described.

Once burn-in occurs in the interior of the compressor 1, the rotary shaft 4 stops rotating. Consequently, the hub 15 also stops rotating, and therefore the numbers of revolutions of the pulley 13 and the hub 15 come to differ from each other, resulting in that a torque load is applied onto the coupling member 31. When the torque load exceeds the given value, the first pin 14 deforms the whole coupling member 31 elastically to broaden the distance L2' between the holding portions 31c, 31c through pressing the second projections 32c, 32c by means of the outside surface thereof as the pulley 13 rotates. Further, when the pulley 13 rotates, the first pin 14 moves on the holding surfaces S, S toward free ends side of the holding portions 31c, 31c to broaden the distance between the holding surfaces S, S, and then the first pin 14 will be released from the coupling member 31 after the distance L2" is equal to the diameter of the first pin 14. At this time, the coupling member 31 crosses at about right angle to the radial direction of the pulley 13 and the hub 15. Through the above mechanism, the power transmission from the pulley 13 to the rotary shaft 4 is cut off, and the pulley 13 will run idle.

In the following, in order to explain time-change of force acting from the first pin 14 to the coupling member 31 in the above release process, described will be the case where force F acts axially on the coupling member 31 in a state where the first pin 14 is sandwiched between the holding portions 31c, 31c.

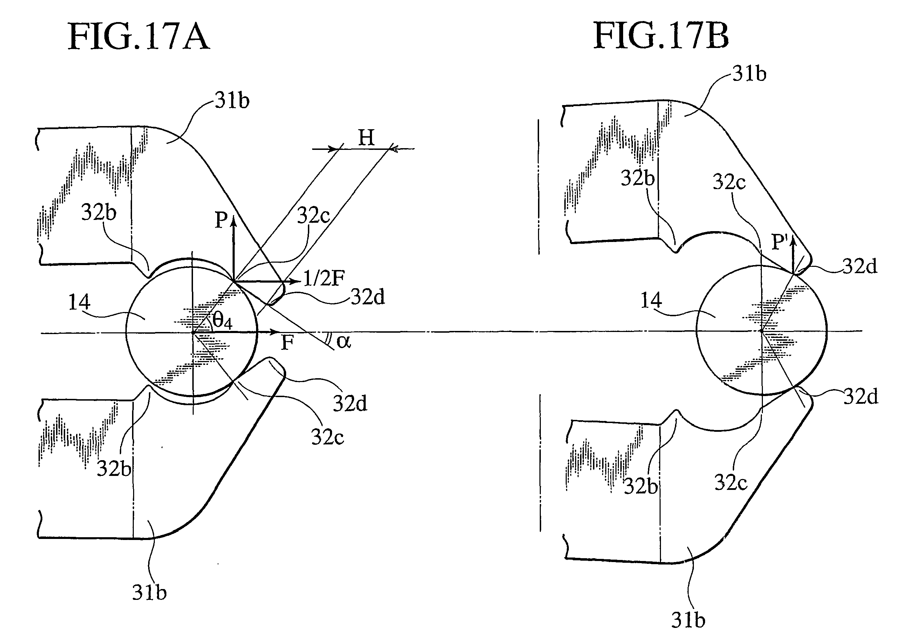

As shown in FIG.17A, if the force F acts on the first pin 14, the first pin 14 is apart from the first projections 32b, 32b and pressed against the second projections 32c, 32c. At this time, reaction forces P, P from the second projections 32c, 32c act on the first pin 14.

As shown in FIG.17B, if the force F increases, the first pin 14 is apart from the second projections 32c, 32c and then moves on the holding surfaces S, S while broadening the distance between the holding surfaces S, S. if the force F further increases, the first pin 14 is pressed against the third projections 32d, 32d. At this time, reaction forces P', P' from the third projections 32d, 32d act on the first pin 14.

In a state where the force F acts on the first pin 14, the following relationship holds: P = 1/2Ftan θ 4, that is F = 2P/tan θ 4. Assuming that there is not friction resistance, the above relationship holds. Accordingly, in order to keep the force F constant, it is necessary to meet the following conditions: P' < P and L2' > L2". Additionally, in consideration of the friction resistance, the value of the reaction forces P, P' can be changed by modifying slightly an angle α to the axial direction of the coupling member 25.

Next, shown will be measured data of a pull-out load applied from the first pin 14 to the coupling member 31 (or 18) under the condition that the first pin 14 is pulled outward at a constant speed by acting force F axially on the coupling member 31 (or 18) after coupling the first pin 14 and the second pin 17 with the coupling member 31 (or 18) independently.

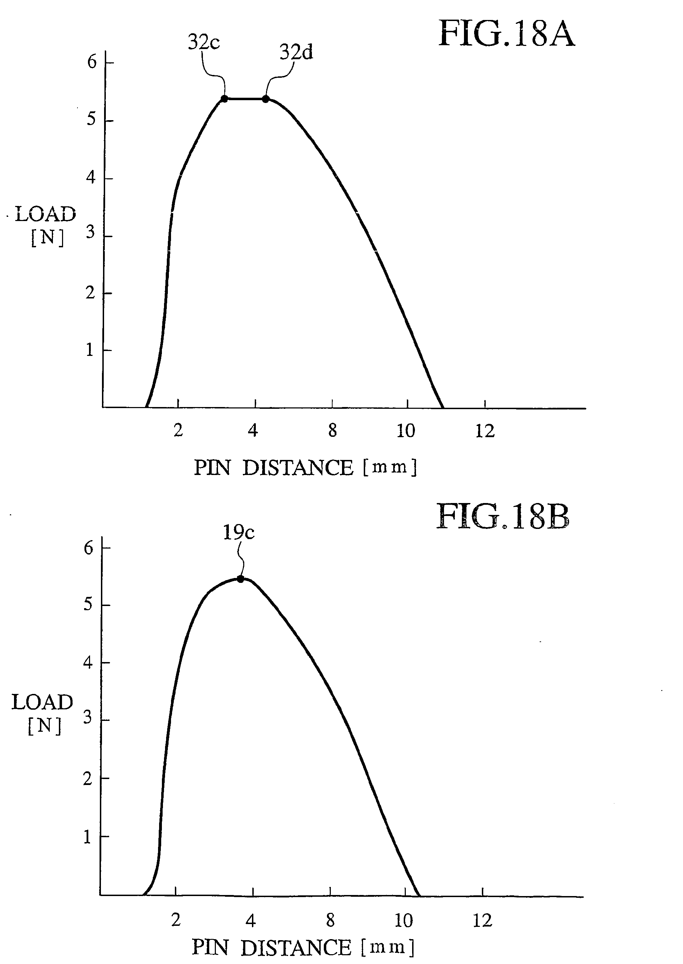

As shown in FIG.18A, the maximum pull-out load on the first pin 14 for the coupling member 31 is about 55N and is continuously generated in the region from the second projection 32c to the third projection 32d. The first pin 14 is released from the coupling member 31 when the pin distance has about 11mm.

As shown in FIG.18B, the maximum pull-out load on the first pin 14 for the coupling member 18 is about 55N and is only generated near the second projection 19c. The first pin 14 is released from the coupling member 18 when the pin distance has about 10.5mm.

Therefore, the coupling member 31 remains nearly unaffected by noise to stabilize the release process because the coupling member 31 needs impulse above a certain value in order to release the first pin 14 from the coupling member 31.

The coupling member 31 has the following features.

Since the coupling member 31 is made of bearing steel, it has wear resistance, resiliency and excellent tensile strength.

When the torque load exceeds the given value, the first pin 14 will slide on the holding surfaces S, S as the pulley 13 rotates. During this sliding motion, the first pin 14 generates the maximum pull-out load keeping a constant value to deform the coupling member 31 via the holding portions 31c, 31c. Therefore, the coupling member 31 needs impulse above a certain value in order to release the first pin 14 from the holding portions 31c, 31c, which stabilizes the release process without being affected by noise.

Further, since the contact area between the first pin 14 and the coupling member 31 in the power-transmission cutoff member of the present embodiment is smaller than a contact area between a rolling ball and a buffer rubber in a conventional power-transmission cutoff member and is slightly larger than a contact area between the first pin 14 and the coupling member 18 in the conventional power-transmission cutoff member of the first embodiment, preventing the pull-out load from being affected by the age-degradation of the coupling member 31. Therefore, power transmission is always cut off at a constant torque load.

Since each of the coupling members 31 is arranged at a regular angle apart from the adjacent ones 31, torque loads applied on the coupling members 31 are equal to one another. Therefore, power transmission is always cut off at a constant torque load. As a result, if the torque load required for cutting off power transmission has tolerance, the tolerance can be passed to members except for the coupling members 31.

In the following, a first to a fourth modification of the present embodiment will be described.

### (First Modification)

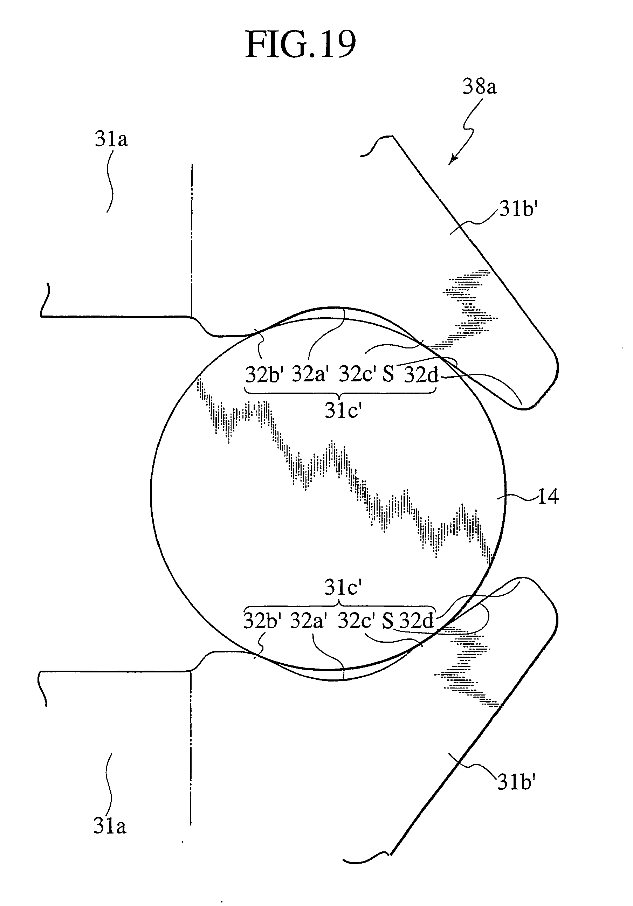

As shown in FIG.19, holding portions 31c', 31c' of a coupling member 38a is formed by inside surfaces 32a', 32a', first projections 32b', 32b', second projections 32c', 32c', the third projections 32d, 32d and the holding surfaces S, S. Curvature of each inside surface 32a' is larger than that of the first pin 14. The first projection 32b' and the second projection 32c' are provided at both end portions of each inside surface 32a'. Curvatures of the first projection 32b' and the second projection 32c' are smaller than those of the first projection 32b and the second projection 32c. According to the above constitution, since contact area between the first pin 14 and the coupling member 38a is slightly larger than that between the first pin 14 and the coupling member 31, the first pin 14 can be securely sandwiched by the holding portions 31c', 31c'.

### (Second Modification)

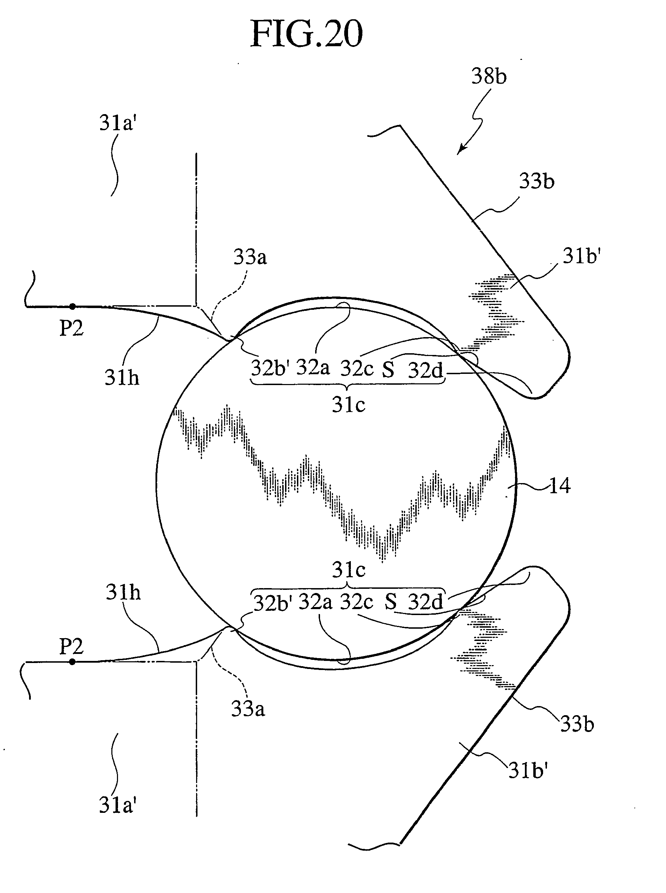

As shown in FIG.20, in a sidepiece portion 31a' and a bent portion 31b" of a coupling member 38b, a first projection 32b" is smoothly jointed to the inside surface of the sidepieces portion 31a'. Concretely, a slope 31h is formed gently from the given position P2 on the open end side of the inside surface of the sidepiece portion 31a' to the top of the first projection 32b". According to the above constitution, when the first pin 14 is coupled to the coupling member 38b, the first pin 14 is inserted between holding portions 31c", 31c" under the guidance of the slopes 31h, 31h as the pulley 13 rotates. Therefore, operation of coupling the first pin 14 to the coupling member 38b can be simply performed.

### (Third Modification)

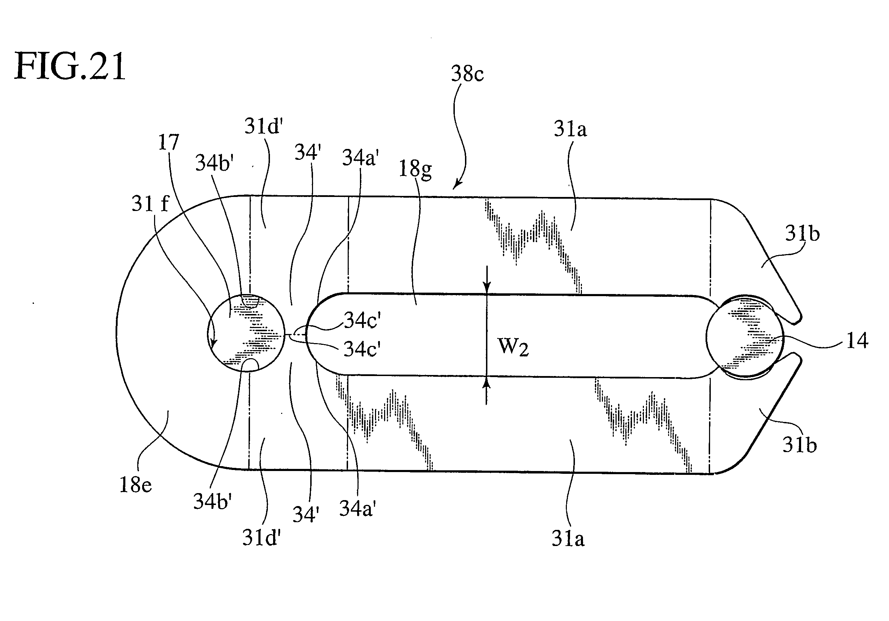

As shown in FIG.21, a through-hole 31f' is disposed separately from a spacing 31g' by joining protrusions 34', 34' together of joining portions 31d', 31d' of a coupling member 38c. Each protrusion 34' has a first slant 34a', a second slant 34b' and a flat surface 34c'.

The first slants 34'a, 34'a are joined to each other and also joined to inside surfaces of sidepiece portions 31a, 31a, respectively. The first slants 34'a, 34'a form a semicircle with a diameter, W2. The second slants 34b', 34b' are joined to each other and also joined to an inside surface of a curved portion 31e. In the plan view of the coupling member 38c, the through-hole portion 31f' is formed by the second slants 34b', 34b' and the inside surface of the curved portion 31e to be isolated from the spacing 31g'. The flat surfaces 34c', 34c' are disposed parallel to the axial direction of the coupling member 38c and are joined together. Each flat surface 34c' connects the first slant 34a' to the second slant 34b'. According to the above constitution, releasing of the second pin 17 from coupling member 38c can be securely avoided.

### (Fourth Modification)

With regard to a spacing 31g of the coupling member 31, the width W2 of the spacing 31g is larger than the distance L2, L2' and also larger than the diameter of the first pin 14. According to the above constitution, the first pin 14 can be easily inserted into the spacing 31g when the first pin 14 is coupled with the coupling member 31. Therefore, operation of coupling the first pin 14 to the coupling member 31 can be simply performed.

Other than the above modifications, various modifications can be carried out without departing from the essential characteristics of the present invention.

For example, the first pin 14 sandwiched between the holding portions 31c, 31c may be disposed in the hub 15, and the second pin 17 passed through and fitted into the through-hole 31f of the coupling member 31 may be disposed in the pulley 13.

Moreover, the coupling member 31 may be made of a plastically deformable material. Accordingly, the coupling member 31 can be more miniaturized than the case where the coupling member 31 is elastically deformed when the first pin 14 is released from the coupling member 31. Therefore, miniaturization of the whole device will be realized and design will also be easier.

Further, in the above release process, force (pull-out load) acting from the first pin 14 to the coupling member 31 may be maximized when the coupling member 31 crosses at 85° to 95° to the radial direction of the pulley 13 and the hub 15.

### (Third Embodiment)

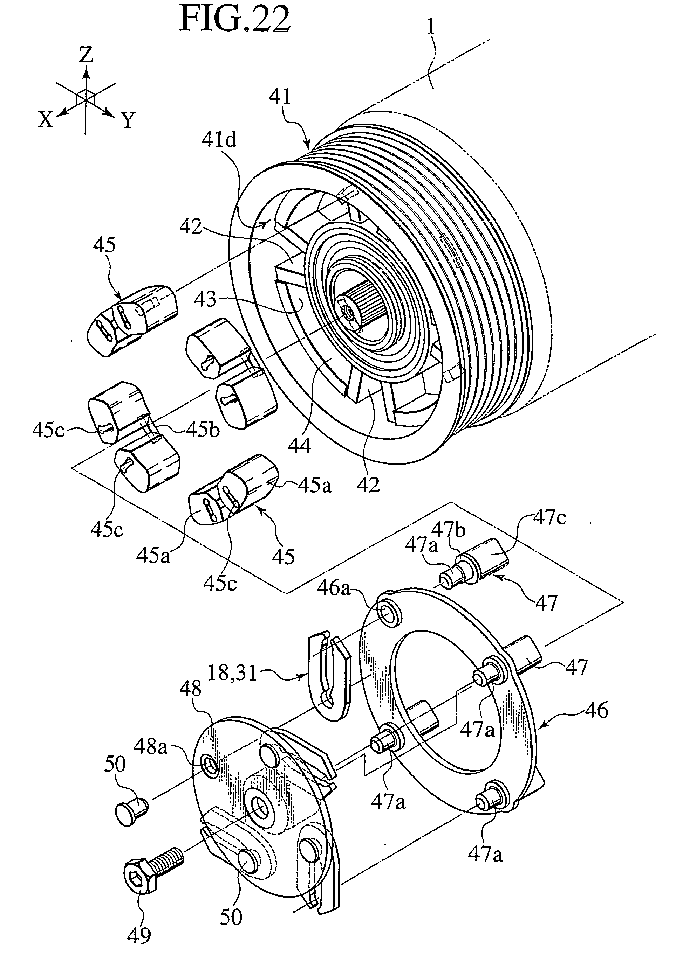

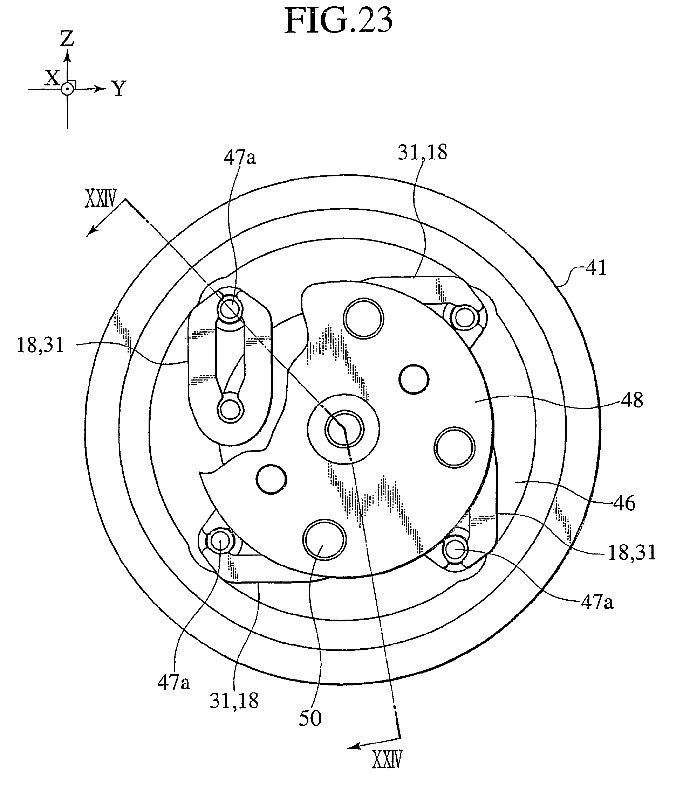

Referring to FIGS.22 to 24, the third embodiment will be described below. The same members as those in the constitution of the first and second embodiment are given the same numerals. The third embodiment is different from the first embodiment in that a coupling member is disposed between a hub and location plate.

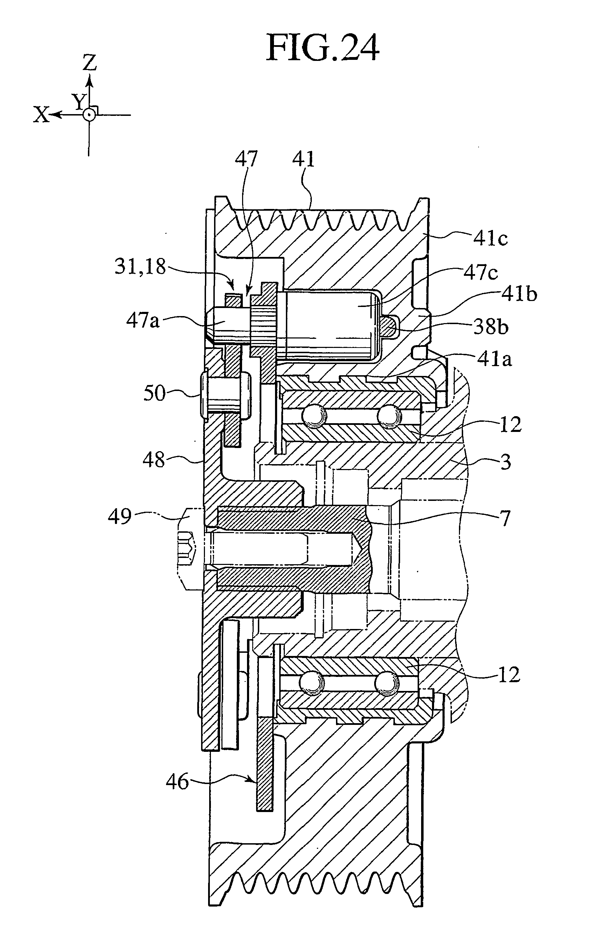

As shown in FIG.24, a pulley 41 is rotatably attached to a boss portion 3 via a bearing 12. The pulley 41 has an inner cylinder portion 41a, a joint portion 41b and an outer cylinder portion 41c. The inner cylinder portion 41a is formed in the shape of a cylinder and is coaxial with a rotary shaft 4. The joint portion 41b is formed, in the shape of a round ring, integrally on the outside surface of a end portion (―X side) of the inner cylinder portion 41a and protrudes outward in the radial direction of the inner cylinder portion 41a. The outer cylinder portion 41c is formed, in the shape of a cylinder, integrally at the circumferential end of the joint portion 41b and is coaxial with the rotary shaft 4. The outer cylinder portion 41c has an outside surface on which a plurality of V grooves are formed for winding the belt B on them.

The pulley 41 has an annular recess 41d formed by the outside surface of the inner cylinder portion 41a, the end surface on the +X side of the joint portion 41b and the inside surface of the outer cylinder portion 41c. The recess 41d is open in the +X direction.

As shown in FIG.22, the recess 41d has a plurality of ribs 42 and step portions 43. The ribs 42 are disposed in the radial direction of the recess 41d between an outside circumferential surface of the inner cylinder portion 41a and an inside circumferential surface of the outer cylinder portion 41c. The step portions 43 are provided, extending by a given length, along the inside circumferential surface of the outer cylinder portion 41c. The recess 41d has reception spaces 44 each of which is defined by the two ribs 42 and the step portion 43.

A damper 45 has a pair of damper bodies 45a, a joining band 45b and grooved portions 45c, and is received within the reception space 44. The damper 45 is made of an elastic body such as a rubber, a soft resin.

The damper body 45a is molded into a block approximately in the shape of a rectangular prism. The joining band 45b joins together a pair of the damper bodies 45a at each first end portion of the damper bodies 45a. The grooved portion 45c is formed at the second end portion of each damper body 45a. The grooved portion 45c increases in flexibility of the damper body 45a.

The first end portion side of the damper 45 is received in the reception space 44 and the second end portion side of the damper 45 protrudes outward into an opening of the recess 41d.

The location plate 46 is formed in the shape of a round ring and has a plurality of insertion holes 46a. The pin insertion holes 46a are disposed, on the same circumference with the axis of the location plate 46 as the center, spaced a given angle apart from the adjacent pin insertion holes 46a. Additionally, in the present embodiment, four pin insertion holes 46a are disposed on the location plate every 90° apart from one another.

A location shaft 47 has a first pin 47a, a flange plate 47b and a shaft body 47c. The first pin 47a is formed in the shape of a column. Each of the first pins 47a is passed through and fitted into the pin insertion hole 46a and is disposed standing upright at an end face on the +X side of the location plate 46. The flange plate 47b is provided on an end portion of the first pin 47a. The shaft body 47c extends from the first pin 47a coaxially with the first pin 47a and is formed integrally with the first pin 47a in the shape of a flat shaft.

The location shaft 47 is coupled with the pulley 41 by inserting the shaft body 47c between a pair of the damper bodies 45a. Thereby, the location plate 46 is rotated integrally with the pulley 41 via the damper 45 and the location shaft 47.

A hub 48 is fixed to an end portion 4a of the rotary shaft 4 with a bolt 49. The hub 48 is coaxial with the rotary shaft 4. Further, the hub 48 has a periphery at which a plurality of pin-insertion holes 48a are formed. The pin-insertion holes 48a are disposed, on the same circumference with the axis of the hub 48 as the center, spaced a given angle apart from the adjacent ones 48a. Additionally, in the present embodiment, four pin-insertion holes 48a are disposed at the periphery of the hub 48 every 90° apart from one another.

Second pins 50 are formed approximately in the shape of a column. Each of the second pins 50 is passed through and fitted into the pin-insertion hole 48a. As shown in FIG.22, the second pin 50 is coupled with the first pin 47a via the coupling member 31 (or 18). Thereby, the hub 48 is coupled with the location plate 46 via the coupling member 31 (or 18).

In the following, a method of coupling the location shaft 47 and the second pin 50 on the coupling member 31 will be described referring FIG.22.

First, the second pin 50 is inserted into one of the pin-insertion holes 48a of the hub 48. Second, after the end portion of the second pin 50 is inserted into the through-holes 31f of the coupling members 31 and washer (not shown), the coupling member 31 is linked with the hub 48 in a caulking manner. Also, the washer may be omitted in the caulking manner. Third, the location shaft 47 is inserted and fixed into one of the insertion holes 46a of the location plate 46 and then inserted into the spacing 31g of the coupling member 31.

Next, the location shaft 47 is moved toward an open end (the holding portions 31c, 31c) side of the spacing 31g and then coupled on the coupling member 31 by rotating the location plate 46 and the hub 48 relatively. In the case of fastening the location plate 46, the hub 48 is rotated in an anticlockwise direction when viewing in the direction of +X. Then, the location plate 46 and the hub 48 are fixed to the pulley 41 and the end portion 4a of the rotary shaft 4, respectively.

Therefore, a method for manufacturing the power transmission device, comprising the steps of: fitting plural coupling members 31 to the hub 48, mounting plural location shafts 47 to the location plate 46, inserting each location shaft 47 into the spacing 31g of the coupling member 31 and moving each location shaft 47 toward an open end side of the spacing 31g to be coupled on the coupling member 31 by rotating the location plate 46 and the hub 48 relatively.

### Industrial Applicability

When the number of revolutions of a hub is smaller than the number of revolutions of a pulley and when a torque load exceeding a given value is applied on a coupling member, a first pin is released from the coupling member. At this time, since a contact area between the first pin and the coupling member in a power-transmission cutoff member of the present invention is smaller than a contact area between a rolling ball and a buffer rubber in a conventional power-transmission cutoff member, a force required for releasing the first pin from the coupling member is kept nearly constant. Therefore, the torque load required for cutting off the power transmission to a rotary shaft of a compressor can be maintained at a constant value.

Since, through fitting the first pin and a second pin into a sandwich portion (or a holding portion) and a through hole respectively, assembling operation of a power transmission device is finished, the assembling operation can be performed extremely easier than the conventional assembling operation. Therefore, enhancement of productivity will be accomplished.

## Claims

1. A power transmission device (11) comprising :
a first transmission member (13) rotatably attached at a boss portion (3) of a housing (2) of a compressor (1) ;
a second transmission member (15) fixed to an end portion of a rotary shaft (4) passing loosely through the boss portion ;
a first pin (14) mounted on one of the first transmission member and the second transmission member ;
a second pin (17) mounted on the other of the first transmission member and the second transmission member ; and
a coupling member (18;31) coupling the first pin with the second pin to transmit power from the first transmission member to the second transmission member and cutting off the power transmission when a torque load applied to the first pin exceeds a given value, wherein the coupling member is **characterised by** comprising :
a pair of sidepiece portions (18a;31a) disposed parallel to each other ;
a pair of bent portions (18b;31b) having free ends, basic ends joined integrally to first ends of the sidepiece portions respectively and sandwich portions (18c;31c) supporting the first pin by sandwiching, wherein each of the sandwich portions comprising :
plural projections (19b,19c;32b,32c) disposed at regular intervals one another in a circumferential direction of the first pin and contacted with the outside circumferential surface of the first pin ; and
plural surfaces (19a;32a) each disposed between the adjacent projections and opposed to the outside circumferential surface of the first pin at a regular distance ; and
a curved portion (18e;31e) having both ends joined integrally to second ends of the sidepiece portions respectively and a hole through and into which the second pin is passed and fitted,
wherein the first pin is sandwiched between the sandwich portions by inserting the first pin into a spacing between the sidepiece portions and then pressing the first pin toward the bent portion side to deform the bent portions in a direction away from each other and
the first pin is released from the coupling member when the torque load applied to the first pin exceeds a given value.

2. The power transmission device according to the claim 1, wherein the projection (19b;19c;32b;32c) is point-contacted with the outside circumferential surface of the first pin in the plan view.

3. The power transmission device according to the claim 1, wherein the projection (19b;19c;32b;32c) is line-contacted with the outside circumferential surface of the first pin in the cross-sectional view.

4. The power transmission device according to the claim 1, wherein curvature of the surface (19a;32a) is larger than that of the first pin in the plan view.

5. The power transmission device according to the claim 1, wherein the projection (19b;19c;32b;32c) is formed in the round shape in the plan view.

6. The power transmission device according to the claim 1, wherein the sidepiece portions (18a;31a), the bent portions (18b;31b) and the curved portion (18e;31e) all elastically deform when the first pin (14) is released from the sandwich portions.

7. The power transmission device according to the claim 1, wherein the sidepiece portions (18a;31a), the bent portions (18b;31b) and the curved portion (18e;31e) all plastically deform when the first pin (14) is released from the sandwich portions.

8. The power transmission device according to the claim 1, wherein a distance between the sidepiece portions (18a;31a) is larger than a diameter of the first pin (14).

9. The power transmission device according to the claim 1, wherein a distance between the projections (19b;32b) respectively located on the basic end sides of the bent portions is longer than that between the projections (19c;32c) respectively located on the free end sides of the bent portions.

10. The power transmission device according to the claim 1, wherein the distance between the projections (19b;32b) respectively located on the basic end sides of the bent portions is longer than that between the projections (19c;32c) respectively located on the free end sides of the bent portions under the condition where the sandwich portions support the second pin (17) by sandwiching.

11. The power transmission device according to the claim 1, wherein an inside surface of the sidepiece portion (18a;31a) is smoothly joined to the projection (19b;32b) located on the basic end side of the bent portion (18b;31b).

12. The power transmission device according to the claim 1, wherein each sandwich portion (18c;31c) further comprises a holding surface (5) configured to extend from the projection (19c;32c) located on the free end side of the bent portion.

13. The power transmission device according to the claim 1, wherein the coupling member (18;31) is arranged at a regular angle apart from the adjacent ones.

14. The power transmission device according to the claim 1, wherein the coupling member (18;31) is arranged between the first transmission member (13) and the second transmission member (15).

15. The power transmission device according to the claim 1, wherein further comprising a linking means (22) pressing the coupling member (18;31) against one of the first transmission member (13) and the second transmission member (15).

16. The power transmission device according to the claim 1, wherein force acting from the first pin (14) to the coupling member (18;31) is maximized when the coupling member crosses at a right angle to the radial direction of the rotary shaft (4).

17. A method for manufacturing a power transmission device (11), comprising the steps of :
fitting a first pin (14) into a hole of a coupling member (18;31) wherein the first pin is mounted on one of a first transmission member (13) and a second transmission member (15) ;
inserting a second pin (17) into a spacing of the coupling member wherein the second pin is mounted on the other of the first transmission member and the second transmission member ;
fastening the transmission member on which the first pin is mounted ; and
sandwiching the second pin between sandwich portions (18c;31c) of the coupling member by rotating the transmission member on which the second pin is mounted to move the second pin toward an open end side of the spacing.

18. A compressor (1) comprising :
a housing (2);
a boss Portion (3) formed at end portion (4a) of the housing ;
a rotary shaft (4) passing loosely through the boss portion ; and
a power transmission device (11) transmitting deriving force of an engine (221) to the rotary shaft, wherein the power transmission device comprising :
a first transmission member (13) rotatably attached at the boss portion ;
a second transmission member (15) fixed to an end portion of the rotary shaft ;
a first pin (14) mounted on one of the first transmission member and the second transmission member ;
a second pin (17) mounted on the other of the first transmission member and the second transmission member ; and
a coupling member (18;31) coupling the first pin with the second pin to transmit power from the first transmission member to the second transmission member and cutting off the power transmission when a torque load applied to the first pin exceeds a given value, wherein the coupling member is **characterized by** comprising :
a pair of sidepiece portions (18a;31a) disposed parallel to each other ;
a pair of bent portions (18b;31b) respectively having free ends, basic ends joined integrally to first ends of the sidepiece portions respectively and sandwich portions (18c;31c) supporting the first pin by sandwiching wherein each of the sandwich portions comprising :
plural projections (19b,19c;32b,32c) disposed at regular intervals one another in a circumferential direction of the first pin and contacted with the outside circumferential surface of the first pin; and
plural surfaces (19a;32a) each disposed between the adjacent projections and opposed to the outside circumferential surface of the first pin at a regular distance ; and
a curved portion (18e;31e) having both ends joined integrally to second ends of the sidepiece portions (18a;31a) respectively and having a hole through and into which the second pin is passed and fitted,
wherein the first pin is sandwiched between the sandwich portions by inserting the first pin into a spacing between the sidepiece portions and then pressing the first pin toward the bent portion side to deform the bent portions in a direction away from each other and
the first pin is released from the coupling member when the torque load applied to the first pin exceeds a given value.

## Patentansprüche

1. Eine Kraftübertragungsvorrichtung (11) umfassend:
ein erstes Übertragungselement (13), rotierbar angebunden an einem Naben-Abschnitt (3) eines Gehäuses (2) eines Kompressors (1);
ein zweites Übertragungselement (15), fixiert an einem End-Abschitt einer Radialwelle (4), welche lose durch den Naben-Abschnitt hindurchragt;
einen ersten Bolzen (14), montiert auf einem von dem ersten Übertagungselement und dem zweiten Übertragungselement;
einen zweiten Bolzen (17), montiert auf dem anderen von dem ersten Übertragungselement und dem zweiten Übertragungselement; und
ein Kopplungselement (18, 31), welches den ersten Bolzen mit dem zweiten Bolzen koppelt, um Energie von dem ersten Übertragungselement auf das zweite Übertragungselement zu übertragen und die Energieübertragung abzukoppeln, wenn eine Drehmomentlast, angewandt auf den ersten Bolzen einen gegebenen Wert überschreitet, wobei das Kopplungselement **dadurch gekennzeichnet ist, dass** es folgendes umfasst:
ein Paar von Seitenstück-Abschnitten (18a; 31 a), angeordnet parallel zueinander;
ein Paar von gebogenen Abschnitten (18b; 31 b), mit freien Enden, Basis-Enden, verbunden integral mit ersten Enden der jeweiligen Seitenstück-Abschnitte, und Sandwich-Abschnitten (18c; 31 c), welche den ersten Bolzen durch Anordnen in einem Sandwich unterstützen, wobei jeder der Sandwich-Abschnitte folgendes umfasst:
mehrere Vorsprünge (19b, 19c; 32b, 32c) angeordnet in regelmäßigen Intervallen zueinander in einer umlaufenden Orientierung zum ersten Bolzen und in Kontakt mit der außenseitig gelegenen umlaufenden Oberfläche des ersten Bolzens; und
mehrere Oberflächen (19a; 32a) jeweils angeordnet zwischen den benachbarten Vorsprüngen und gegenüberliegend zur außenseitig gelegenen umlaufenden Oberfläche des ersten Bolzen in einem regelmäßigen Abstand; und
einen gekrümmter Abschnitt (18e; 31 e) mit beiden Enden, integral verbunden an zweite Enden von den jeweiligen Seitenstück-Abschnitten und einem Loch **dadurch**, wobei in dieses der zweite Bolzen hindurchragt und eingepasst ist,
wobei der erste Bolzen in einem Sandwich zwischen den Sandwich-Abschnitten angeordnet wird durch Einbringen des ersten Bolzen in einen Zwischenraum zwischen den Seitenstück-Abschnitten und anschließendes Pressen des ersten Bolzen in Richtung der gebogenen Abschnitt-Seite, um die gebogenen Abschnitte in eine Richtung weg voneinander zu deformieren und
der ersten Bolzen von dem Kopplungselement freigesetzt wird, wenn die Drehmomentlast, angewandt auf den ersten Bolzen, einen gegebenen Wert überschreitet.

2. Die Kraftübertragungsvorrichtung gemäß Anspruch 1, wobei der Vorsprung (19b, 19c; 32b, 32c) in Punktkontakt befindlich ist mit der außenseitig gelegenen umlaufenden Oberfläche des ersten Bolzen in der ebenen Ansicht.

3. Die Kraftübertragungsvorrichtung gemäß Anspruch 1, wobei der Vorsprung (19b, 19c; 32b, 32c) in einem Linienkontakt befindlich ist mit der außenseitig gelegenen umlaufenden Oberfläche des ersten Bolzen in der Querschnittsansicht.

4. Die Kraftübertragungsvorrichtung gemäß Anspruch 1, wobei die Krümmung der Oberfläche (19a; 32a) größer ist als diejenigen des ersten Bolzens in der ebenen Ansicht.

5. Die Kraftübertragungsvorrichtung gemäß Anspruch 1, wobei der Vorsprung (19b; 19c; 32b; 32c) in der runden Form in der ebenen Ansicht ausgebildet ist.

6. Die Kraftübertragungsvorrichtung gemäß Anspruch 1, wobei die Seitenstück-Abschnitte (18a; 31 a), die gebogenen Abschnitte (18b; 31 b) und der gekrümmte Abschnitt (18e; 31 e) sich alle elastisch deformieren, wenn der erste Bolzen (14) von den Sandwich-Abschnitten freigesetzt wird.

7. Die Kraftübertragungsvorrichtung gemäß Anspruch 1, wobei die Seitenstück-Abschnitte (18a; 31a), die gebogenen Abschnitte (18b; 31b) und der gekrümmte Abschnitt (18e; 31 e) sich alle plastisch deformieren, wenn der erste Bolzen (14) von den Sandwich-Abschnitten freigesetzt wird.

8. Die Kraftübertragungsvorrichtung gemäß Anspruch 1, wobei ein Abstand zwischen den Seitenstück-Abschnitten (18a, 31 a) größer ist als ein Durchmesser des ersten Bolzens (14).

9. Die Kraftübertragungsvorrichtung gemäß Anspruch 1, wobei ein Abstand zwischen den Vorsprüngen (19b; 32b), jeweils lokalisiert auf den Basis-End-Seiten der gebogenen Abschnitte, länger ist als derjenige zwischen den Vorsprüngen (19c; 32c), jeweils lokalisiert auf den freien End-Seiten der gebogenen Abschnitte.

10. Die Kraftübertragungsvorrichtung gemäß Anspruch 1, wobei der Abstand zwischen den Vorsprüngen (19b; 32b), jeweils lokalisiert auf den Basis-End-Seiten der gebogenen Abschnitte, länger ist, als derjenige zwischen den Vorsprüngen (19c; 32c), jeweils lokalisiert auf den freien End-Seiten der gebogenen Abschnitte unter der Bedingung, wo die Sandwich-Abschnitte den zweiten Bolzen (17) durch Sandwich-Ausbildung unterstützen.

11. Die Kraftübertragungsvorrichtung gemäß Anspruch 1, wobei die inseitige Oberfläche des Seitenstück-Abschnitts (18a, 31 a) nahtlos an den Vorsprung (19b; 32b), lokalisiert auf der Basis-End-Seite des gebogenen Abschnitts (18b; 31 b) gebunden ist.

12. Die Kraftübertragungsvorrichtung gemäß Anspruch 1, wobei jeder Sandwich-Abschnitt (18c; 31 c) desweiteren eine Haltefläche (5) umfasst, die so konfiguriert ist, dass sie sich von dem Vorsprung (19c; 32c), lokalisiert auf der freien End-Seite des gebogenen Abschnitts erstreckt.

13. Die Kraftübertragungsvorrichtung gemäß Anspruch 1, wobei das Kopplungselement (18; 31) in einem regelmäßigen Winkel relativ zu den benachbarten angeordnet ist.

14. Die Kraftübertragungsvorrichtung gemäß Anspruch 1, wobei das Kopplungselement (18; 31) angeordnet ist zwischen dem ersten Übertragungselement (13) und dem zweiten Übertragungselement (15).

15. Die Kraftübertragungsvorrichtung gemäß Anspruch 1, welche desweiteren ein Verknüpfungsmittel (22) umfasst, welches das Kopptungselement (18; 31) gegen eines von dem ersten Übertragungselement (13) und dem zweiten Übertragungselement (15) presst.

16. Die Kraftübertragungsvorrichtung gemäß Anspruch 1, wobei die Kraft, welche vom ersten Bolzen (14) auf das Kopplungselement (18; 31) wirkt, maximiert wird, wenn das Kopplungselement in einem rechten Winkel zur radialen Richtung der Radialwelle (4) kreuzt.

17. Ein Verfahren zum Herstellen einer Kraftübertragungsvorrichtung (11) umfassend die folgenden Schritte:
Einpassen eines ersten Bolzen (14) in ein Loch eines Kopplungselements (18; 31), wobei der erste Bolzen montiert wird auf einem von einem ersten Übertragungselement (13) und einem zweiten Übertragungselement (15);
Einbringen eines zweiten Bolzen (17) in einen Zwischenraum des Kopplungselements, wobei der zweite Bolzen montiert wird auf dem anderen von dem ersten Übertragungselement und dem zweiten Übertragungselement;
Befestigen des Übertragungselementes, auf welches der erste Bolzen montiert ist; und
Einbringen des zweiten Bolzens in einen Sandwich zwischen Sandwich-Abschnitten (18c; 31 c) des Kopplungselements durch Rotieren des Übertragungselements, an welches der zweite Bolzen montiert ist, um den zweiten Bolzen in Richtung einer offenen End-Seite des Zwischenraumes zu bewegen.

18. Ein Kompressor (1) umfassend:
ein Gehäuse (2);
einen Naben-Abschnitt (3), ausgebildet am End-Abschnitt (4a) des Gehäuses; eine Radialwelle (4), welche lose durch den Naben-Abschnitt hindurchragt; und
eine Kraftübertragungsvorrichtung (11), übertragend eine zufließende Kraft von einem Motor (221) auf die Radialwelle, wobei die Kraftübertragungsvorrichtung folgendes umfasst:
ein erstes Übertragungselement (13), rotierbar angebunden an den Naben-Abschnitt;
ein zweites Übertragungselement (15), fixiert an einen End-Abschnitt der Radialwelle;
einen ersten Bolzen (14), montiert auf einem von dem ersten Übertagungselement und dem zweiten Übertragungselement;
einen zweiten Bolzen (17), montiert auf dem anderen von dem ersten Übertragungselement und dem zweiten Übertragungselement; und
ein Kopplungselement (18, 31), welches den ersten Bolzen mit dem zweiten Bolzen koppelt, um Energie von dem ersten Übertragungselement auf das zweite Übertragungselement zu übertragen und die Energieübertragung abzukoppeln, wenn eine Drehmomentlast, angewandt auf den ersten Bolzen einen gegebenen Wert überschreitet, wobei das Kopplungselement **dadurch gekennzeichnet ist, dass** es folgendes umfasst:
ein Paar von Seitenstück-Abschnitten (18a; 31 a), angeordnet parallel zueinander;
ein Paar von gebogenen Abschnitten (18b; 31 b), jeweils mit freien Enden, Basis-Enden, verbunden integral mit ersten Enden der jeweiligen Seitenstück-Abschnitte, und Sandwich-Abschnitten (18c; 31 c), welche den ersten Bolzen durch Anordnen in einem Sandwich unterstützen, wobei jeder der Sandwich-Abschnitte folgendes umfasst:
mehrere Vorsprünge (19b, 19c; 32b, 32c) angeordnet in regelmäßigen Intervallen zueinander in einer umlaufenden Orientierung zum ersten Bolzen und in Kontakt mit der außenseitig gelegenen umlaufenden Oberfläche des ersten Bolzens; und
mehrere Oberflächen (19a; 32a) jeweils angeordnet zwischen den benachbarten Vorsprüngen und gegenüberliegend zur außenseitig gelegenen umlaufenden Oberfläche des ersten Bolzen in einem regelmäßigen Abstand; und
einen gekrümmter Abschnitt (18e; 31e), mit beiden Enden, integral verbunden an zweite Enden von den jeweiligen Seitenstück-Abschnitten (18a; 31 a) und einem Loch **dadurch**, wobei in dieses der zweite Bolzen hindurchragt und eingepasst ist,
wobei der erste Bolzen in einem Sandwich zwischen den Sandwich-Abschnitten angeordnet wird durch Einbringen des ersten Bolzen in einen Zwischenraum zwischen den Seitenstück-Abschnitten und anschließendes Pressen des ersten Bolzen in Richtung der gebogenen Abschnitt-Seite, um die gebogenen Abschnitte in eine Richtung weg voneinander zu deformieren und
der ersten Bolzen von dem Kopplungselement freigesetzt wird, wenn die Drehmomentlast, angewandt auf den ersten Bolzen, einen gegebenen Wert überschreitet.

## Revendications

1. Dispositif de transmission de puissance (11) comprenant :
un premier élément de transmission (13) fixé à rotation sur une partie de moyeu (3) d'un carter (2) d'un compresseur (1) ;
un second élément de transmission (15) fixé sur une partie d'extrémité d'un arbre tournant (4) passant lâchement à travers la partie de moyeu ;
un premier goupille (14) monté sur l'un du premier élément de transmission et du second élément de transmission ;
un second goupille (17) monté sur l'autre du premier élément de transmission et du second élément de transmission ; et
un élément de couplage (18 ; 31) couplant le premier goupille avec le second goupille pour transmettre la puissance du premier élément de transmission au second élément de transmission et couper la transmission de puissance quand une charge de couple appliquée au premier goupille dépasse une valeur donnée, dans lequel l'élément de couplage est **caractérisé par le fait qu'**il comprend :
une paire de parties latérales (18a; 31a) disposées parallèles l'une à l'autre ;
une paire de parties pliées (18b; 31b) ayant des extrémités libres, des extrémités de base jointes intégralement aux premières extrémités des parties latérales respectivement et des parties de prise en sandwich (18c; 31c) supportant le premier goupille en le prenant en sandwich, dans lequel chacune des parties de prise en sandwich comprend :
plusieurs saillies (19b, 19c; 32b, 32c) disposées à intervalles réguliers les unes des autres dans une direction circonférentielle du premier goupille et entrant en contact avec la surface circonférentielle extérieure du premier goupille ; et
plusieurs surfaces (19a; 32a) chacune disposées entre les saillies adjacentes et opposées à la surface circonférentielle extérieure du premier goupille à distance régulière ; et
une partie courbée (18e; 31e) ayant deux extrémités jointes intégralement aux secondes extrémités des parties latérales respectivement et un trou à travers lequel et dans lequel le second goupille est passé et ajusté,
dans lequel le premier goupille est pris en sandwich entre les parties de prise en sandwich en insérant le premier goupille dans un espace entre les parties latérales et en pressant ensuite le premier goupille vers la partie pliée pour déformer les parties pliées dans une direction s'éloignant l'une de l'autre et
le premier goupille est libéré de l'élément de couplage quand la charge de couple appliquée au premier goupille dépasse une valeur donnée.

2. Dispositif de transmission de puissance selon la revendication 1, dans lequel la saillie (19b; 19c; 32b; 32c) est en contact ponctuel avec la surface circonférentielle extérieure du premier goupille dans la vue plane.

3. Dispositif de transmission de puissance selon la revendication 1, dans lequel la saillie (19b; 19c; 32b; 32c) est en contact linéaire avec la surface circonférentielle extérieure du premier goupille dans la vue en coupe.

4. Dispositif de transmission de puissance selon la revendication 1, dans lequel la courbure de la surface (19a, 32a) est supérieure à celle du premier goupille dans la vue plane.

5. Dispositif de transmission de puissance selon la revendication 1, dans lequel la saillie (19b; 19c; 32b; 32c) est de forme arrondie dans la vue plane.

6. Dispositif de transmission de puissance selon la revendication 1, dans lequel les parties latérales (18a; 31a), les parties pliées (18b; 31b) et la partie courbée (18e; 31e) se déforment toutes élastiquement quand le première goupille (14) est libéré des parties de prise en sandwich.

7. Dispositif de transmission de puissance selon la revendication 1, dans lequel les parties latérales (18a; 31a), les parties pliées (18b; 31b), et la partie courbée (18e; 31e) se déforment toutes plastiquement quand le première goupille (14) est libéré des parties de prise en sandwich.

8. Dispositif de transmission de puissance selon la revendication 1, dans lequel une distance entre les parties latérales (18a; 31a) est supérieure à un diamètre du premier goupille (14).

9. Dispositif de transmission de puissance selon la revendication 1, dans lequel une distance entre les saillies (19b; 32b) respectivement situées sur les côtés d'extrémité de base des parties pliées est plus longue que celle entre les saillies (19c; 32c) respectivement situées sur les côtés d'extrémité libre des parties pliées.

10. Dispositif de transmission de puissance selon la revendication 1, dans lequel la distance entre les saillies (19b; 32b) respectivement situées sur les côtés d'extrémité de base des parties pliées est plus longue que celle entre les saillies (19c; 32c) respectivement situées sur les côtés d'extrémité libre des parties pliées dans l'état où les parties de prise en sandwich supportent le second goupille (17) par prise en sandwich.

11. Dispositif de transmission de puissance selon la revendication 1, dans lequel une surface intérieure de la partie latérale (18a; 31a) est jointe doucement à la saillie (19b; 32b) située sur le côté d'extrémité de base de la partie courbée (18b; 31b).

12. Dispositif de transmission de puissance selon la revendication 1, dans lequel chaque partie de prise en sandwich (18c; 31c) comprend en outre une surface de maintien (5) configurée pour s'étendre depuis la saillie (19c; 32c) située sur le côté d'extrémité libre de la partie courbée.

13. Dispositif de transmission de puissance selon la revendication 1, dans lequel l'élément de couplage (18; 31) est agencé avec un angle normal par rapport aux éléments adjacents.

14. Dispositif de transmission de puissance selon la revendication 1, dans lequel l'élément de couplage (18; 31) est agencé entre le premier élément de transmission (13) et le second élément de transmission (15).

15. Dispositif de transmission de puissance selon la revendication 1, comprenant en outre des moyens de liaison (22) pressant l'élément de couplage (18; 31) contre l'un du premier élément de transmission (13) et du second élément de transmission (15).

16. Dispositif de transmission de puissance selon la revendication 1, dans lequel la force agissant depuis le premier goupille (14) sur l'élément de couplage (18; 31) est maximisée quand l'élément de couplage coupe à angle droit la direction radiale de l'arbre tournant (4).

17. Procédé de fabrication d'un dispositif de transmission de puissance (11) comprenant les étapes consistant à :
monter un premier goupille (14) dans un trou d'un élément de couplage (18; 31) dans lequel le premier goupille est monté sur l'un d'un premier élément de transmission (13) et d'un second élément de transmission (15) ;
insérer un second goupille (17) dans un espace de l'élément de couplage dans lequel le second goupille est monté sur l'autre du premier élément de transmission et du second élément de transmission ;
fixer l'élément de transmission sur lequel le premier goupille est monté ; et
prendre en sandwich le second goupille entre les parties de prise en sandwich (18c; 31c) de l'élément de couplage en faisant tourner l'élément de transmission sur lequel le second goupille est monté pour déplacer le second goupille vers un côté d'extrémité ouverte de l'espace.

18. Compresseur (1) comprenant :
un carter (2) ;
une partie de moyeu (3) formée au niveau d'une partie d'extrémité (4a) du carter ;
un arbre tournant (4) passant lâchement à travers la partie de moyeu ; et
un dispositif de transmission de puissance (11) transmettant la force dérivée d'un moteur (221) à l'arbre tournant, dans lequel le dispositif de transmission de puissance comprend :
un premier élément de transmission (13) fixé à rotation sur la partie de moyeu ;
un second élément de transmission (15) fixé sur une partie d'extrémité de l'arbre tournant ;
un premier goupille (14) monté sur l'un du premier élément de transmission et du second élément de transmission ;
Un second goupille (17) monté sur l'autre du premier élément de transmission et du second élément de transmission ; et
Un élément de couplage (18 ; 31) couplant le premier goupille avec le second goupille pour transmettre la puissance du premier élément de transmission au second élément de transmission et couper la transmission de puissance quand une charge de couple appliquée au premier goupille dépasse une valeur donnée, dans lequel l'élément de couplage est **caractérisé par le fait qu'**il comprend :
une paire de parties latérales (18a; 31a) disposées parallèles l'une à l'autre ;
une paire de parties pliées (18b; 31b) ayant des extrémités libres, des extrémités de base jointes intégralement aux premières extrémités des parties latérales respectivement et des parties de prise en sandwich (18c; 31c) supportant le premier goupille en le prenant en sandwich, dans lequel chacune des parties de prise en sandwich comprend :
plusieurs saillies (19b, 19c; 32b, 32c) disposées à intervalles réguliers les unes des autres dans une direction circonférentielle du premier goupille et entrant en contact avec la surface circonférentielle extérieure du premier goupille ; et
plusieurs surfaces (19a; 32a) chacune disposées entre les saillies adjacentes et opposées à la surface circonférentielle extérieure du premier goupille à distance régulière ; et
une partie courbée (18e; 31e) ayant deux extrémités jointes intégralement aux secondes extrémités des parties latérales (18a ; 31a) respectivement et un trou à travers lequel et dans lequel le second goupille est passé et ajusté,
dans lequel le premier goupille est pris en sandwich entre les parties de prise en sandwich en insérant le premier goupille dans un espace entre les parties latérales et en pressant ensuite le premier goupille vers la partie courbée pour déformer les parties pliées dans une direction s'éloignant l'une de l'autre et
le premier goupille est libéré de l'élément de couplage quand la charge de couple appliquée au premier goupille dépasse une valeur donnée.
